# EUROPEAN PATENT APPLICATION

(11) **EP 2 023 571 A1**
(43) Date of publication of application: **11.02.2009**
(21) Application number: 08158161.3
(22) Date of filing: 12.06.2008
(51) Int. Cl.: H04L 29/06, H04W 12/12

(54) **Method and system for wireless communications characterized by IEEE 802.11W and related protocols**

(30) Priority: 11.07.2007 US 775869; 10.08.2007 US 836805
(71) Applicant: Airtight Networks, Inc., Mountain View, CA 94043 (US)
(72) Inventor: Gopinath, K.N., 411007, Pune (IN); Vartak, Amit, 411004, Pune (IN); Ahmad, MD Sohail, 411007, Pune (IN); Jonnalagadda, Murthy, 411007, Pune (IN); Gupta, Deepak, 411027, Pune (IN)
(74) Representative: Clark, Jane Anne

(57) **Abstract**

A method for protecting wireless communications from denial of service attacks is provided. The method comprises establishing a first wireless connection between an access point device and a client device. The method also comprises receiving at the access point device a request for establishing a second wireless connection between the access point device and the client device while a state of the first wireless connection being an established state at an access point device side endpoint. The method comprises determining whether the request for establishing the second wireless connection is effectual to drive connection states at the access point device side endpoint and at the client device side endpoint in a condition of deadlock if the access point device side endpoint for the first wireless connection is indeed terminated upon receiving the request for establishing the second wireless connection.

## Description

### CROSS-REFERENCES TO RELATED APPLICATIONS

This present application claims priority from U.S. Patent Application No. 11/775,869 entited "Method and System for Prevention of Unauthorized Communication Over 802.11w and Related Wireless Protocols", filed on July 11, 2007, which is commonly owned and hereby incorporated by reference herein.

This present application claims priority from U.S. Patent Application No. 11/836,805 entited "Method and System for Wireless Communications Characterized by IEEE 802.11w and Related Protocols", filed on August 10, 2007, which is commonly owned and hereby incorporated by reference herein. The U.S. Patent Application No. 11/836,805 is a continuation in part of the U.S. patent application No. 11/775,869.

### BACKGROUND OF THE INVENTION

Computer systems have proliferated from academic and specialized science applications to day-to-day business, commerce, information distribution and home applications. Such systems can include personal computers (PCs) to large mainframe and server class computers. Powerful mainframe and server class computers run specialized applications for banks, small and large companies, e-commerce vendors, and governments. Personal computers can be found in many offices, homes, and even local coffee shops.

The computer systems located within a specific local geographic region (e.g., an office, building floor, building, home, or any other defined indoor and/or outdoor geographic region) are typically interconnected using a Local Area Network (LAN)(e.g., the Ethernet). The LANs, in turn, can be interconnected with each other using a Wide Area Network (WAN)(e.g., the Internet). A conventional LAN can be deployed using an Ethernet-based infrastructure comprising cables, hubs switches, and other elements.

Connection ports (e.g., Ethernet ports) can be used to couple multiple computer systems to the LAN. For example, a user can connect to the LAN by physically attaching a computing device (e.g., a laptop, desktop, or handheld computer) to one of the connection ports using physical wires or cables. Other types of computer systems, such as database computers, server computers, routers, and Internet gateways, can be connected to the LAN in a similar manner. Once physically connected to the LAN, a variety of services can be accessed and/or provided by these computers (e.g., file transfer, remote login, email, WWW, database access, and voice over IP).

Using recent (and increasingly popular) wireless technologies, users can now be wirelessly connected to the computer network. Thus, wireless communication can provide wireless access to a LAN in the office, home, public hot-spot, and other geographical locations. The IEEE 802.11 family of standards (also called Wireless Local Area Network, WLAN or WiFi) are popular for such wireless communication. In WiFi, the 802.11b standard provides for wireless connectivity at speeds up to 11 Mbps in the 2.4 GHz radio frequency spectrum; the 802.11g standard provides for even faster connectivity up to about 54 Mbps in the 2.4 GHz radio frequency spectrum; and the 802.11a standard provides for wireless connectivity at speeds up to about 54 Mbps in the 5 GHz radio frequency spectrum. Wireless communication standards that offer even higher data rates such AS 802.11n and/or operate in different frequency spectrums such as 802.16 are also possible.

Advantageously, WiFi can facilitate a quick and effective way of providing wireless extension to existing LAN. To provide this wireless extension, one or more WiFi access points (APs) can connect to the connection ports either directly or through intermediate equipment, such as WiFi switch. After an AP is connected to a connection port, a user can access the LAN using a device (called a "station" or a "client") equipped with WiFi radio. Examples of the devices equipped with WiFi radio include but not limited to laptop computers, personal digital assistants (PDAs), handheld scanners, fixed computers etc. The station can wirelessly communicate with the AP and the AP can transfer information between wired and wireless portions of the LAN.

Certain limitations also exist with WiFi. These limitations can be exploited to launch denial of service (DOS) attacks on the wireless network. For example, via DOS attacks, one or more legitimate wireless clients can be prevented from wirelessly connecting to the APs. For example, in deauthentication DOS attack, an attacker can prevent the legitimate wireless client from wirelessly connecting to the AP by repeatedly disrupting the wireless connection between the client and the AP by repeatedly transmitting spoofed deauthentications. This can result in wireless network unavailability. Since wireless signals can penetrate physical structures such as walls of the building, the DOS attacks can also be launched from outside of the premises of operation of the LAN. Therefore a need arises to improve security of wireless computer networks.

Certain other limitations also exist with WiFi which uses radio signals for information transfer. Since wireless signals cannot be confined to physical boundaries of premises, they often cause a concern to the owner of the wireless computer network. In particular the owners are concerned about spillage of wireless signals from the computer network into outside of the premises (e.g., home, office, building, campus etc.) as the spillage of signals can be used for unauthorized access to the wireless computer network. For example, unauthorized wireless clients (e.g., neighbor's clients or other clients in parking lot, street etc.) can access the computer network using this spillage. Also authorized clients can accidentally or deliberately attempt connection to external (e.g., neighbor's) computer networks using radio spillage of those networks. It is also common to find wireless APs connected to the LAN by employees without the knowledge of administrator. Whether such action is inadvertent or malicious, such APs may not employ the correct security controls and hence their signal spillage may provide easy avenue for hackers outside the LAN premises to gain unauthorized access to the LAN. Also therefore a need arises to improve security of wireless computer networks.

### BRIEF SUMMARY OF THE INVENTION

According to the present invention, techniques directed to wireless computer networking are provided. More particularly, the present invention provides methods and systems for enhancing security of wireless networking environments characterized by the IEEE 802.11w and related protocols, and their variants. In certain specific embodiments, the present invention provides methods and systems for protecting wireless communications characterized by 802.11w and related protocols from certain denial of service attacks which also the present applicants have discovered. In certain alternative specific embodiments, the present invention provides methods and systems for disrupting undesirable wireless communication characterized by 802.11w and related protocols.

According to an embodiment of the present invention, a method is provided for protecting wireless communications from denial of service attacks. The method includes establishing a first wireless connection between an access point device and a client device. An access point device side endpoint and a client device side endpoint are associated with the first wireless connection. Moreover, the establishing at least results in a state of the first wireless connection being an established state at each of the access point device side endpoint and the client device side endpoint. The method includes receiving at the access point device a request for establishing a second wireless connection between the access point device and the client device. Moreover, the request is received while the state of the first wireless connection being the established state at the access point device side endpoint. The method also includes creating an access point device side endpoint for the second wireless connection between the access point device and the client device, subsequent to the receiving the request. Moreover the access point device side endpoint for the second wireless connection is created while the first wireless connection is in the established state at the access point device side endpoint. The method includes verifying whether the first wireless connection is in the established state at the client device side endpoint subsequent to the receiving the request for establishing the second wireless connection at the access point device.

According to an alternative embodiment of the present invention, a wireless access point system is provided for protecting wireless communications from denial of service attacks. The system comprises a memory module comprising one or more computer memory devices. The memory module stores computer code. The system also comprises a processing module comprising one or more micro processing devices. The processing module is for executing the computer code. The system comprises one or more radio transceiver modules. Moreover, the computer code is adapted to establish a first wireless connection with a client device using at least one of the one or more radio transceiver modules. An access point side endpoint and a client side endpoint are associated with the first wireless connection. The establishing is to also result in a state of the first wireless connection being an established state at each of the access point side endpoint and the client side endpoint. The computer code is also adapted to receive using at least one of the one or more radio transceiver modules a request for establishing a second wireless connection with the client device. Moreover, the request is to be received while the state of the first wireless connection being the established state at the access point side endpoint. The computer code is adapted to create an access point side endpoint for the second wireless connection with the client device, subsequent to the receiving the request. Moreover, the access point side endpoint for the second wireless connection is to be created while the first wireless connection is in the established state at the access point side endpoint. The computer code is also adapted to verify whether the first wireless connection is in the established state at the client side endpoint subsequent to the receiving the request for establishing the second wireless connection.

According to yet an alternative embodiment of the present invention, a method for protecting wireless communications from denial of service attacks is provided. The method includes establishing a first wireless connection between an access point device and a client device. An access point device side endpoint and a client device side endpoint are associated with the first wireless connection. Moreover, the establishing at least results in a state of the first wireless connection being an established state at each of the access point device side endpoint and the client device side endpoint. The method includes receiving at the access point device a request for establishing a second wireless connection between the access point device and the client device. Moreover, the request is received while the state of the first wireless connection being the established state at the access point device side endpoint. The method also includes verifying that the first wireless connection is in the established state at the client device side endpoint subsequent to the receiving at the access point device the request for establishing the second wireless connection. The method includes discarding the request for establishing the second wireless connection subsequent to the verifying.

According to a further alternative embodiment of the present invention, a method is provided for protecting wireless communications from denial of service attacks. The method comprises establishing a first wireless connection between an access point device and a client device. An access point device side endpoint and a client device side endpoint are associated with the first wireless connection. Moreover, the establishing at least results in a state of the first wireless connection being an established state at each of the access point device side endpoint and the client device side endpoint. The method includes receiving at the access point device a request for establishing a second wireless connection between the access point device and the client device. Moreover, the request is received while the state of the first wireless connection being the established state at the access point device side endpoint. The method also includes verifying that the first wireless connection is not in the established state at the client device side endpoint subsequent to the receiving at the access point device the request for establishing the second wireless connection. The method includes terminating the access point device side endpoint for the first wireless connection subsequent to the verifying and creating an access point device side endpoint for the second wireless connection subsequent to the verifying.

According to an embodiment of the present invention, a wireless access point system is provided for protecting wireless communications from denial of service attacks. The system comprises a memory module comprising one or more computer memory devices. The memory module stores computer code. The system also comprises a processing module comprising one or more micro processing devices. The processing module is to execute the computer code. The system comprises one or more radio transceiver modules. Moreover, the computer code is adapted to establish a first wireless connection with a client device using at least one of the one or more radio transceiver modules. An access point side endpoint and a client side endpoint are associated with the first wireless connection. The establishing is to also result in a state of the first wireless connection being an established state at each of the access point side endpoint and the client side endpoint. The computer code is also adapted to receive using at least one of the one or more radio transceiver modules a request for establishing a second wireless connection with the client device. Moreover, the request is to be received while the state of the first wireless connection being the established state at the access point side endpoint. The computer code is adapted to verify that the first wireless connection is in the established state at the client side endpoint subsequent to the receiving the request for establishing the second wireless connection and to discard the request for establishing the second wireless connection subsequent to the verifying.

According to yet a further embodiment of the present invention, a wireless access point system is provided for protecting wireless communications from denial of service attacks. The system comprises a memory module comprising one or more computer memory devices. The memory module stores computer code. The system also comprises a processing module comprising one or more micro processing devices. The processing module is to execute the computer code. The system comprises one or more radio transceiver modules. Moreover, the computer code is adapted to establish a first wireless connection with a client device using at least one of the one or more radio transceiver modules. An access point side endpoint and a client side endpoint are associated with the first wireless connection. The establishing is to also result in a state of the first wireless connection being an established state at each of the access point side endpoint and the client side endpoint. The computer code is also adapted to receive using at least one of the one or more radio transceiver modules a request for establishing a second wireless connection with the client device. Moreover, the request is to be received while the state of the first wireless connection being the established state at the access point side endpoint. The computer code is adapted to verify that the first wireless connection is not in the established state at the client side endpoint subsequent to the receiving the request for establishing the second wireless connection. The computer code is also adapted to terminate the access point side endpoint for the first wireless connection subsequent to the verifying and to create an access point side endpoint for the second wireless connection subsequent to the verifying.

According to an alternative embodiment of the present invention, a method for disrupting undesirable wireless communication in wireless network is provided. The method includes providing one or more sniffer devices to monitor wireless communications in a wireless network and detecting a wireless connection established between an access point device and a client device using the one or more sniffer devices. Preferably, the wireless connection is configured for not being disconnected upon receiving a spoofed disconnection request transmitted from a wireless device other than the access point device and the client device. The method also includes disrupting the wireless connection established between the access point device and the client device by transmitting one or more spoofed connection requests from at least one of the one or more sniffer devices.

According to yet an alternative embodiment of the present invention, a method for disrupting undesirable wireless communication in wireless network is provided. The method includes providing one or more sniffer devices that are spatially disposed over a geographic region associated with the wireless network to monitor wireless communications in the wireless network. The method includes receiving information associated with an undesirable wireless link between an access point device and a client device at at least one of the one or more sniffer devices. This information includes wireless MAC addresses of the access point device and the client device, respectively. The method includes driving the undesirable wireless link in a state of deadlock by transmitting one or more spoofed connection requests from at least one of the one or more sniffer devices. Moreover, the one or more spoofed connection requests are transmitted while the undesirable wireless link is in a state of being connected. Each of the one or more spoofed connection requests includes the wireless MAC address of the client device as originator identity and the wireless MAC address of the access point device as destination identity.

According to another alternative embodiment of the present invention an apparatus for disrupting undesirable wireless communication is provided. The apparatus includes a memory module. The memory module comprises one or more computer memory devices. The memory module stores one or more first codes for receiving information associated with a wireless connection established between an access point device and a client device in a wireless network. This information includes wireless MAC addresses of the access point device and the client device, respectively. The memory module also stores one or more second codes for receiving instruction for disrupting the wireless connection established between the access point device and the client device. Moreover, the memory module stores one or more third codes for formatting one or more connection requests. Each of the one or more connection requests includes the wireless MAC address of the client device as originator identity and the wireless MAC address of the access point device as destination identity. The apparatus includes a processor module comprising one or more micro processing devices. The processor module being for executing at least the first, the second, and the third codes. The apparatus also includes a transmitter module including one or more wireless communication transmitting interfaces for transmitting the one or more connection requests to disrupt the wireless connection established between the access point device and the client device.

According to an alternative specific embodiment of the present invention a method for protecting wireless communications from denial of service attacks is provided. The method includes establishing a first wireless connection between an access point device and a client device. In this embodiment, an access point device side endpoint and a client device side endpoint are associated with the first wireless connection. Moreover, the establishing at least results in a state of the first wireless connection being an established state at each of the access point device side endpoint and the client device side endpoint. The method also includes receiving at the access point device a request for establishing a second wireless connection between the access point device and the client device while the state of the first wireless connection being the established state at the access point device side endpoint. In this embodiment, the request for establishing the second wireless connection is intended to terminate the access point device side endpoint for the first wireless connection to initiate establishment of the second wireless connection from the access point device. Moreover, the method includes determining whether the request for establishing the second wireless connection is effectual to drive connection states at the access point device side endpoint and at the client device side endpoint in a condition of deadlock if the access point device side endpoint for the first wireless connection is indeed terminated upon receiving the request for establishing the second wireless connection. In an alternative specific embodiment, an access point system including the method of protecting wireless communications from denial of service attacks is provided.

Depending upon the embodiment, various advantages and/or benefits can be achieved by practicing the present invention. In an embodiment, the present invention provides for enhancing the security of the wireless networking environments. For example, the present invention can protect wireless communications characterized by 802.11w and related protocols from certain denial of service attacks. As another example, the present invention can disrupt undesirable wireless links that are resistant to disruption by conventional deauthentication and/or disassociation based denial of service (DOS) techniques. These and other advantages and benefits will be apparent throughout the present specification and more particularly below.

### BRIEF DESCRIPTION OF THE DRAWINGS

Figure 1 shows an exemplary LAN architecture that can facilitate an environment in which certain embodiments of the present invention can be practiced.

Figure 2 shows an exemplary state machine for wireless connection according to an embodiment of the present invention.

Figure 3 shows an exemplary deadlock of state machines according to an embodiment of the present invention.

Figure 4 shows an exemplary flowchart of a method for protecting wireless communications from denial of service attacks according to an embodiment of the present invention.

Figure 5 shows exemplary data structures associated with an endpoint of wireless connection according to an embodiment of the present invention.

Figure 6A and 6B show exemplary state machines for wireless connections according to an embodiment of the present invention.

Figure 7 is an exemplary schematic diagram of a transceiver subsystem according to an embodiment of the present invention.

Figure 8 shows an exemplary flowchart of a method for verifying whether a wireless connection is in an established state at a client device side endpoint according to an embodiment of the present invention.

Figure 9 shows an exemplary flowchart of a method for verifying whether a wireless connection is in an established state at a client device side endpoint according to an alternative embodiment of the present invention.

Figure 10 shows an exemplary flowchart of a method for protecting wireless communications from denial of service attacks according to an alternative embodiment of the present invention.

Figure 11 shows an exemplary LAN architecture that can facilitate an environment in which certain other embodiments of the present invention can be practiced.

Figure 12 shows an exemplary schematic diagram of a sniffer device according to an embodiment of the present invention.

Figure 13 shows an exemplary flowchart of a method for disrupting undesirable wireless communication according to an embodiment of the present invention.

### DETAILED DESCRIPTION OF SPECIFIC EMBODIMENTS

According to the present invention, techniques for wireless computer networking are provided. The present invention provides methods and systems for improving security of wireless computer networks. More particularly, the present invention provides methods and systems for enhancing security of wireless networking environments characterized by the IEEE 802.11w and related protocols, and their variants. In certain specific embodiments, the present invention provides methods and systems for protecting wireless communications characterized by 802.11w and related protocols from certain denial of service attacks. In certain alternative specific embodiments, the present invention provides methods and systems for disrupting undesirable wireless communication characterized by 802.11w and related protocols.

Using recent (and increasingly popular) wireless technologies, wireless access to the local area networks (LANs) in the offices, homes, public hot-spots, and other geographical locations can be provided. The IEEE 802.11 family of standards (also called Wireless Local Area Network, WLAN or WiFi) are popular for such wireless communication. In WiFi, the 802.11b standard provides for wireless connectivity at speeds up to 11 Mbps in the 2.4 GHz radio frequency spectrum; the 802.11g standard provides for even faster connectivity up to about 54 Mbps in the 2.4 GHz radio frequency spectrum; and the 802.11a standard provides for wireless connectivity at speeds up to about 54 Mbps in the 5 GHz radio frequency spectrum. Wireless communication standards that offer even higher data rates such AS 802.11n and/or operate in different frequency spectrums such as 802.16 are also possible.

Advantageously, WiFi can facilitate a quick and effective way of providing wireless extension to existing LAN. To provide this wireless extension, one or more WiFi access points (APs) can connect to the connection ports either directly or through intermediate equipment, such as WiFi switch. After an AP is connected to a connection port, a user can access the LAN using a device (called a "station" or a "client") equipped with WiFi radio. Examples of the devices equipped with WiFi radio include but not limited to laptop computers, personal digital assistants (PDAs), handheld scanners, fixed computers etc. The station can wirelessly communicate with the AP and the AP can transfer information between wired and wireless portions of the LAN.

Certain limitations also exist with WiFi. These limitations can be exploited to launch denial of service (DOS) attacks on the wireless network. For example, via DOS attacks, one or more legitimate wireless clients can be blocked from wirelessly connecting to the APs. This can result in wireless network unavailability. Since wireless signals can penetrate physical structures such as walls of the building, the DOS attacks can also be launched from outside of the premises of operation of the LAN. Therefore a need arises to improve security of wireless computer networks.

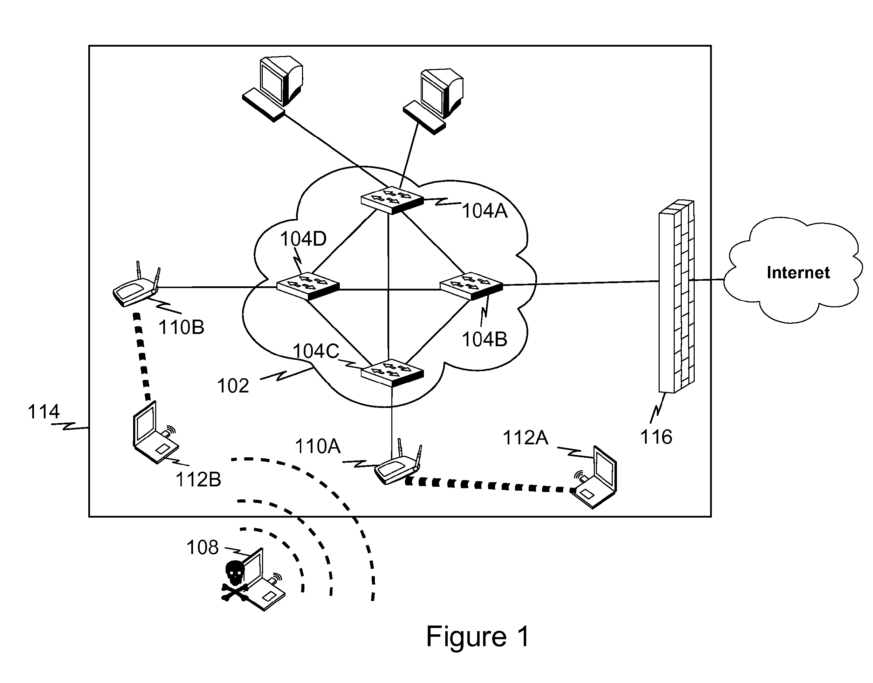

Figure 1 illustrates an exemplary local area network (LAN) of computing systems that can facilitate an environment for certain embodiments of the present invention to be practiced. This diagram is merely an example which should not unduly limit the scope of the claims herein. As shown, a core transmission infrastructure 102 of the LAN can include various transmission components, e.g., hubs, switches, and routers (104A-104D), interconnected using wires. The LAN core 102 can be connected to the Internet through a firewall (106). In a typical deployment, the LAN core 102 comprises one or more network segments. In an embodiment, a network segment can be an IP "subnetwork" (called "subnet"). Each subnet can be identified by a network number (e.g., IP number and subnet mask) and a plurality of subnets are interconnected using router devices. In an embodiment, a network segment can be a VLAN (Virtual LAN). Notably, one or more of the network segments can be geographically distributed (e.g., in offices of a company in different geographic locations). The geographically distributed segments can be interconnected via virtual private network (VPN).

In this embodiment, a wireless extension of the LAN core 102 is also provided. For example, one or more authorized APs 110 (e.g., 110A, 110B etc.) can be connected to the LAN core 102. In this configuration, authorized computing devices 112 (e.g., 112A, 112B etc.) such as desktop computers, laptop computers, handheld computers, PDAs, etc. equipped with radio communication can wirelessly connect to LAN through the authorized APs 110. Notably, authorized APs connected to the LAN provide wireless connection points on the LAN. Note that the Institute of Electrical and Electronics Engineers (IEEE) 802.11 family of standards such as 802.11a,b,g,n,i,w etc.(referred as WLAN or WiFi) or another type of wireless network format (e.g., UWB, WiMax, Bluetooth, etc.) can be used to provide the wireless protocols.

According to certain procedure in the IEEE 802.11 MAC protocol an AP periodically transmits beacon packets (hereafter called "beacons") to announce its existence. Clients will receive these beacons and connect to the AP. Connection establishment between the client and the AP is facilitated by "authentication" and "association" procedures as described in the IEEE 802.11 MAC protocol, and in some embodiments augmented by the security enhancements such as 802.1x, WPA, IEEE 802.11i, IEEE 802.11w etc. Once a client is connected to the AP, it can utilize the services of the AP to access the LAN, and transmit and/or receive "data" packets. Further, breaking of connection between the AP and the client is facilitated by procedures such as "deauthentication" and "disassociation". The procedures, the frame formats and other information about the IEEE 802.11 MAC standard can be found in the publication of IEEE titled "Part 11: Wireless LAN Medium Access Control (MAC) and Physical Layer (PHY) Specifications", 1999 Edition, which is herein incorporated by reference and throughout the present specification.

Certain limitations exist with the deauthentication and disassociation procedures. These limitations can be exploited to inflict denial of service (DOS) attacks on the wireless network. For example, a miscreant or an attacker such as hacker sitting in parking lot or in neighboring premises (e.g., attacker 108) can use deauthentication and/or disassociation against legitimate wireless communication in the LAN and cause disruption to the legitimate wireless communication. As merely an example, in order to disrupt wireless communication between the AP 110B and the client 112B, the attacker 108 can use deauthentication procedure. In a typical deauthentication attack process, the attacker can transmit spoofed deauthentication packets (frames) on the same channel on which the wireless link between the AP and the client operates. For example, the attacker can generate one or more IEEE 802.11 frames with type field set as "management" and subtype field set as "deauthentication". Moreover the source address field is set to the wireless MAC address of the AP 110B (that is, the attacker spoofs the wireless MAC address of the AP 110B), the destination address field is set to the wireless MAC address of the client 112B (or, to a broadcast address of hexadecimal FF:FF:FF:FF:FF:FF), and the BSSID field set to a value same as that used by the frames transmitted by the AP 110B to the client 112B or vice versa (which usually is the wireless MAC address of the AP). When the client 112B receives this frame, it thinks that the AP 110B (e.g., based on the source MAC address field) wants it to disconnect and the client disconnects from the AP. Alternatively, the source address field can be set to the wireless MAC address of the client 112B (that is, the attacker spoofs the wireless MAC address of the client) and the destination address field can be set to the wireless MAC address of the AP 110B. This results in the AP thinking that the client wants to disconnect and the AP disconnects the client. Thus the attacker can keep the client from connecting to the AP and cause disruption to their wireless communication, for example by sending spoofed deauthentication periodically. More information on deauthentication/disassociation attack can be found throughout the present specification and also in the literature, for example, Bellardo and Savage, "802.11 Denial of Service Attacks: Real Vulnerabilities and Practical Solutions", 12th USENIX Security Symposium, August 2003; and A. Vladimirov, K. Gavrilenko, and A. Mikhailovsky, "Wi-Foo The secrets of Wireless hacking", Addison-Wesley, 2004, pp. 123 - 133.). Notably, the attacker 108 can disrupt legitimate wireless communication even from outside of the premises (e.g., premises 114 such as building, office, campus, home etc.) of the operation of the LAN since the DOS attack can be launched using wireless signals.

The IEEE standardization body has recently provided certain description of a protocol called IEEE 802.11w to make IEEE 802.11 MAC protocol resistant to DOS attacks launched using deauthentication and disassociation procedures. Specifically, the IEEE 802.11w protocol specifies that a client will disregard a disconnection request such as deauthentication or disassociation from the AP (i.e., the disconnection request including the AP's MAC address as source address) unless it can validate that it is indeed sent from the AP to which the client station is associated with (connected with). Similarly, the AP will disregard a disconnection request from the client (i.e., the disconnection request including the client's MAC address as source address) unless it can validate that it is indeed sent from the purported client. In this embodiment, disregarding the disconnection request means not disconnecting the wireless link, that is, maintaining the wireless link in a state of being associated in accordance with the IEEE 802.11 MAC protocol even after deauthentication or disassociation frame is received from the peer. In this embodiment, honoring the disconnection request means disconnecting the wireless link, that is, driving the wireless link in a state of being unassociated in accordance with an IEEE 802.11 MAC protocol upon receiving deauthentication or disassociation frame from the peer.

For the validation of the disconnection request (e.g., deauthentication, disassociation etc.), the 802.11w protocol recommends that the disconnection request be authenticated using a shared secret key (e.g., a digital key) that is shared between the AP and the client. That is, the sender of the disconnection request can create a message authentication code on the disconnection request using the shared secret key and the recipient validates this message authentication code using the shared secret key before honoring the request. If the validation fails, it can be an indication that the disconnection request is spoofed (that is, transmitted by some device other than the device associated with the purported source identity in the request) and hence the request is disregarded. If the validation passes, it can be an indication that the disconnection request is non-spoofed (that is, actually transmitted by the device associated with the purported source identity in the request) and hence the request is honored. The 802.11w protocol can resist DOS attacks launched using deauthentication and disassociation procedures. Since the DOS attacker is not expected to have knowledge of the secret key shared between the AP and the client, the DOS attacker cannot create the proper message authentication code on the disconnection request. The attacker's disconnection requests will thus be disregarded by the AP and/or the client.

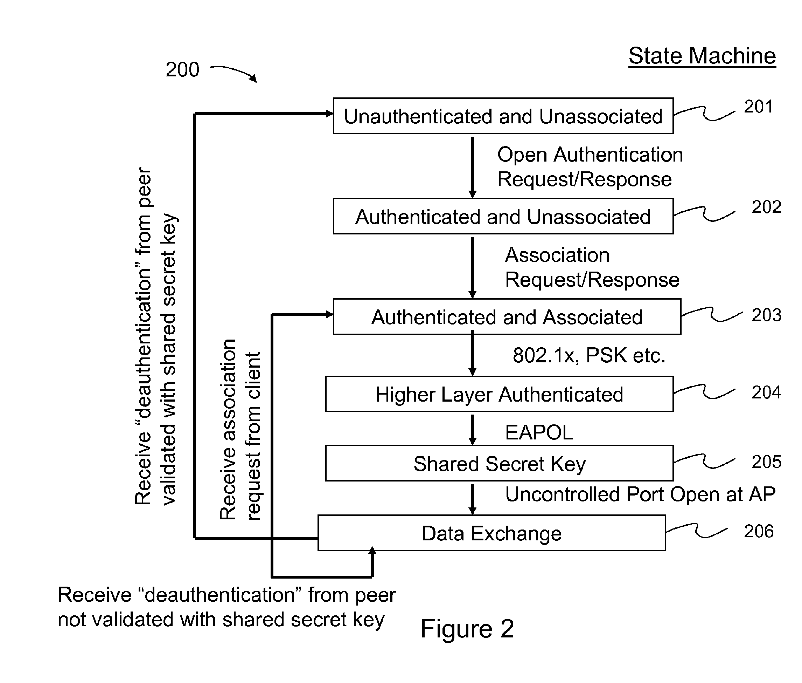

Figure 2 shows an exemplary connection state machine 200 for a wireless connection between an AP and a client operating according to an IEEE 802.11w protocol. This diagram is merely an example, which should not unduly limit the scope of the claims herein. As shown, connection state machine 200 at each of the AP and the client passes through states 201, 202, 203, 204, 205, and 206. That is, the state machines at the AP and the client pass through these states in a substantially synchronized manner in a preferred embodiment. In state 201 (Unauthenticated and Unassociated), in an embodiment the client discovers APs in its vicinity, for example, using channel scanning and probing. The client and the AP then perform legacy authentication procedure, also called layer 2 authentication, using authentication request (e.g., from the client) and response (e.g., from the AP) message transaction. In this embodiment, the layer 2 authentication can be an open system authentication, that is, no authentication at all. Upon completion of the open system authentication, the state machine at each of the client and the AP enters state 202 (Authenticated and Unassociated). From this state 202, the client and the AP perform association procedure using association request (e.g., from the client) and response (e.g., from the AP) message transaction. At the completion of the association procedure, the state machine at each of the client and the AP enters state 203 (Authenticated and Associated). Additional details on the states 201, 202, and 203 can be found in the IEEE 802.11 MAC standard and throughout the present specification. From the state 203, the client and the AP can perform higher layer authentication using protocols such as 802.1x protocol, PSK (pre-shared key) protocol and like. In this embodiment, the higher layer authentication can be performed using passwords, certificates, smart cards and like. Upon completion of the higher layer authentication, the state machine enters state 204 (Higher Layer Authenticated). More details on the state 204 can be found in the IEEE 802.11i protocol description and throughout the present specification. For example, the IEEE 802.11i protocol description can be found in the publication of the IEEE titled "Part 11: Wireless LAN Medium Access Control (MAC) and Physical Layer (PHY) Specifications: Medium Access Control (MAC) Security Enhancements", October 2003 Edition, which is herein incorporated by reference.

Additionally, from the state 204 each of the AP and the client acquire secret keys to be used to provide encryption and/or authentication for the frames (packets) exchanged between them. As merely an example EAPOL protocol can be used for acquiring the secret keys. When EAPOL protocol transaction (e.g., EAPOL 4-way handshake) is completed, the state machine at each of the AP and the client enters state 205 (Shared Secret Key). For example, a secret key called DGTK (Disconnect Group Transfer Key) is used for validating (i.e., authenticating) the disconnection requests from the AP to broadcast destination address. In this embodiment, the disconnection requests to the broadcast destination address can be used to instruct all clients to disconnect from the AP. As another example a shared secret key called PTK (Pairwise Transient Key) is used for validating the disconnection requests from the AP to the destination address of the specific client and vice versa. Additional details on state 205 can be found in the IEEE 802.11i protocol description, the IEEE 802.11w protocol description, and throughout the present specification. For example, the IEEE 802.11w protocol description can be found in the publication of IEEE titled "IEEE P802.11 ™/D0.02 Draft Amendment to Standard for Information Technology - Telecommunications and Information Exchange Between Systems - LAN/MAN Specific Requirements - Part 11: Wireless Medium Access Control (MAC) and physical layer (PHY) specifications Amendments-w: Protected Management Frames", March 2006 Edition, which is herein incorporated by reference. After acquiring the secret keys in state 205, the AP opens data port (called as uncontrolled port) and the state machine enters state 206 (Data Exchange). In the Data Exchange state, the AP can receive data packets from the client and vice versa. As further shown in Figure 2, if an association request message is received in state 206 from the client, the state machine at the AP can go to the state 203. Alternatively it can go to the state 201 or 202. This transition typically occurs when the client reboots and thus wants to initiate a new connection to the AP. Further, in state 206, if the deauthentication message is received from the peer, in an embodiment, the state machine can go to state 201 only if the deauthentication message can be validated with the secret key (e.g., DGTK, PTK etc.) that is shared between the AP and the client.

Certain limitations, drawbacks and disadvantages exist with the connection state machine just described, which the present applicants have discovered. Notably, the 802.11w protocol including many of its versions, revisions, and proprietary implementations (e.g., one proprietary implementation is called MFP (Management Frame Protection)) operate in a substantially similar fashion as illustrated and described with respect to Figure 2. Specifically, the present applicants have discovered that even though the connection state machine as in Figure 2 is resistant to conventional deauthentication and disassociation based DOS attacks, it is still vulnerable to certain other types of DOS attacks. The present applicants have discovered such DOS attacks (which are hereinafter referred to as "deadlock DOS attacks") which are described more particularly below. The present applicants have also invented techniques to overcome the deadlock DOS attack vulnerability which are described throughout the present invention and more particularly below.

For example, the attacker can disrupt the wireless connection between the AP and the client operating as described in Figure 2 by transmitting one or more spoofed connection requests. The spoofed connection requests can comprise association request frames formatted in accordance with an IEEE 802.11 MAC protocol. More specifically, a source address in the association request frame is set to a wireless MAC address of the client device (e.g., the attacker device spoofs the client's wireless MAC address) and a destination address in the association request frame is set to a wireless MAC address of the access point device. Alternatively, the spoofed connection requests can comprise layer 2 authentication request, EAPOL start request and so on.

Upon receiving such spoofed connection request (e.g., association request), the state machine in the AP can go to state 203 shown in Figure 2, that is, to a state of being Authenticated and Associated, but not Higher Level Authenticated. Alternatively it can go to state 201 or 202. This is by design to allow new connection establishment if the client were to reboot and send fresh connection request. In this state, the AP does not accept any frames from client of type data (other than EAP authentication frames) as those frames are not allowed unless the state machine passes the state 205 shown in Figure 2. Moreover, in the state 203, the AP does not maintain the shared secret keys (e.g., DGTK, PTK etc.) as those are not allowed to be created before state machine passes the state 204. On the contrary, the state machine at the client still remains in the state of 206 (Data Exchange). In the Data Exchange state, the client maintains the shared secret keys and expects the AP to validate any disconnection requests with one or more of these keys. The states of the wireless connection at the AP and the client are thus out of synchronization.

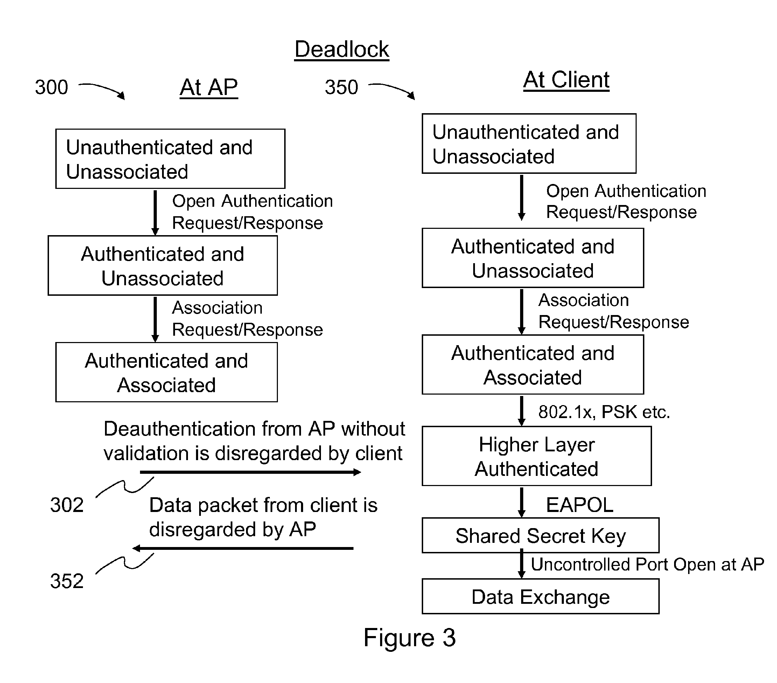

Alternatively, the state machines at the AP and the client are deadlocked as illustrated in Figure 3. Figure 3 shows merely an example which should not unduly limit the scope of the claims herein. As shown in Figure 3, the state machine 300 at the AP goes to a state of being Authenticated and Associated (e.g., state 203 as illustrated in Figure 2) upon receiving spoofed connection request from the attacker. The state machine 350 at the client remains in a state of Data Exchange (e.g., state 206 as illustrated in Figure 2). The AP expects the client to initiate/perform/participate in higher level authentication for state machine 300 to evolve beyond the state of Authenticated and Associated. However, the client state machine 350 having already passed the state of being Higher Level Authenticated, the client does not initiate/perform the higher level authentication.

The client can however continue to send data packets (352) to the AP, as the state machine at the client is in the Data Exchange state. The AP disregards these data packets as the AP is not allowed to receive data packets when the state machine at the AP is in state 203. In this embodiment, disregarding the data packet can include dropping the data packet, not forwarding the data packet, not processing at least a portion of the data packet and like. Realizing that the state machine at the client being off-track, the AP can send deauthentication (302) to the client or to a broadcast destination address in an attempt to disconnect the wireless link and re-synchronize the state machines at the AP and the client. However, the client disregards this deauthentication, as in the state 206, the client is not allowed to honor the deauthentication unless it can be validated with the shared secret key. In this embodiment, disregarding the deauthentication can include maintaining the state machine at the client device in the state 206 as shown in Figure 2. Note the AP does not possess the shared secret key to validate (e.g., authenticate) the deauthentication since the AP's state machine is still at state 203.

The wireless communication over the wireless link between the AP and the client is thus disrupted. This situation can continue until, for example, the client detects that no response is received from the AP to its data packets, infers that the link is broken, and sends fresh association request which can then resynchronize the state machines at the AP and the client. After the link is re-established, another spoofed connection request from the attacker can again put it in a deadlocked condition. By sending a continuous stream of spoofed connection requests, the attacker can keep the link deadlocked for most of the time and thus wireless communication between the AP and the client is disrupted. This is an example of the deadlock DOS attack discovered by the present applicants.

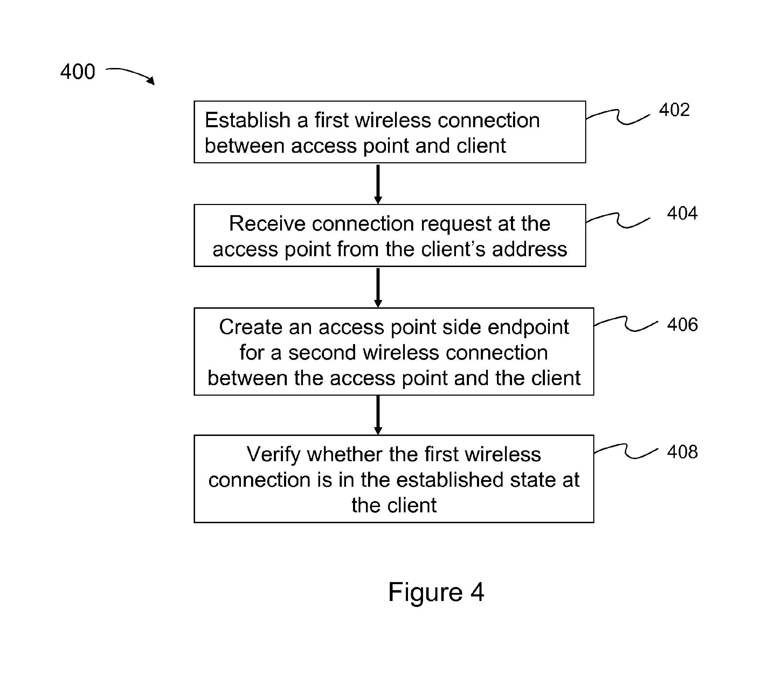

The present applicants have invented techniques to protect against deadlock DOS attacks. According to an embodiment of the present invention a method for protecting wireless communications from denial of service attacks is provided. More particularly, the method for protecting against deadlock DOS attacks is provided. A flowchart for this method 400 is illustrated in Figure 4. This flowchart is merely an exemplary flowchart which should not unduly limit the scope of the claims herein. According to the method 400, a first wireless connection can be established between an access point device and a client device (step 402). For example, the establishing process can be a connection establishment process operating as per or substantially similar to the connection state machine 200 illustrated and described with respect to Figure 2 and throughout the present specification.

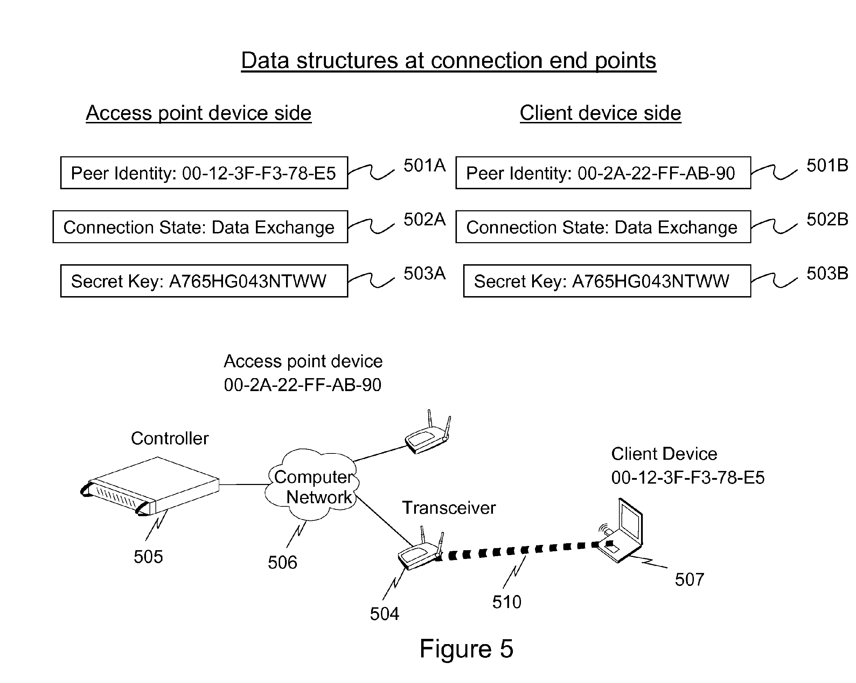

A wireless connection (e.g., established or in process of being established) between the access point device and the client device can have an access point device side endpoint and a client device side endpoint. In an embodiment, one or more data structures can be associated with the endpoint of the wireless connection. Certain exemplary data structures are shown in Figure 5. The figure shows a wireless connection 510 between an access point device (MAC address: 00-2A-22-FF-AB-90) and a client device 507 (MAC address: 00-12-3F-F3-78-E5). As shown, a data structure 501 can store identity of the peer of the wireless connection. For example, the data structure 501A at the access point device side endpoint can indicate wireless MAC address of the client device as the peer. Similarly, a data structure 501 B at the client device side endpoint can indicate wireless MAC address of the access point device as the peer. Another data structure 502 (e.g., 502A on the access point device side and 502B on the client device side) can identify (e.g., track) the state of the wireless connection. In an embodiment, the data structure 502 can track the state of the wireless connection, for example, states 201-206 as illustrated in the state machine 200 of Figure 2. Yet another data structure 503 can store a secret key negotiated between the access point device and the client device (e.g., negotiated at state 205 of the state machine 200, for example using EAPOL 4-way handshake). Alternatively or in addition, the connection endpoint can also have associated with it software configured to be able to process requests and issue responses associated with the wireless connection.

The establishing the first wireless connection in step 402 of the method 400 at least results in a state of the first wireless connection being an established state (e.g., Data Exchange state 206 in the state machine 200) at each of the access point device side endpoint and the client device side endpoint. As described throughout the present specification and more particularly with respect to the state machine 200, a first secret key is associated with the first wireless connection in the Data Exchange state at each of the access point device side endpoint and the client device side endpoint. For example, the first secret key can include PTK (Pairwise Transient Key) generated using the EAPOL 4-way handshake.

The first secret key can be used to provide cryptographic authentication for the 802.11 frames exchanged between the access point device and the client device. In an embodiment, the cryptographic authentication can be provided via message authentication code (sometimes also referred to as message integrity code (MIC)). For example, a message authentication code is generated by the sender as a function of at least a portion of an 802.11 frame to be sent (e.g., transmitted over wireless medium) and the first secret key. The generated code is included in the transmitted 802.11 frame. The receiver of the frame also generates a message authentication code as a function of (preferably, the same function as that used by the sender) at least a portion of the received 802.11 frame (preferably, the same portion that was used by the sender for the generation of the code) and the first secret key. If the code generated by the receiver matches the code generated by the sender (which is included in the transmitted frame), the cryptographic authentication check is said to have passed on the received frame. If there is no match, the cryptographic authentication check is said to have failed on the received frame.

The first secret key can also be used to provide encryption for the 802.11 frames exchanged between the access point device and the client device. In an embodiment, if the frame that is encrypted by the sender using the first secret key can be properly decrypted (e.g., substantially conforms to the expected format after decrypting) by the recipient, the cryptographic authentication check is said to have passed on the frame.

Further information on generation and use of the first secret key and other information can be found in the description of the IEEE 802.11i and IEEE 802.11w protocols, and throughout the present specification.

At step 404, the method can receive at the access point device a request for establishing a second wireless connection between the access point device and the client device. For example, the request can comprise an association request including identity of the client device as originator of the request (e.g., wireless MAC address of the client device in the source address field of the connection request). Notably, the request is received while the state of the first wireless connection at the access point device side endpoint being the established state. In this embodiment, the request may be originated by the client device (e.g., after rebooting, loss of connection, handoff etc.), or it may be originated by an attacker device to inflict deadlock DOS attack as illustrated and described with respect to Figure 3 and throughout the present specification. In an embodiment, the method according the present invention can differentiate between the former and the latter cases as described throughout the present specification and more particularly below. The method can thus protect wireless communications from deadlock DOS attacks.

Upon receiving the request as in step 404, the method can create an access point device side endpoint for a second wireless connection between the access point device and the client device (step 406). For example, this step 406 can include creating data structures such as 501A, 502A, 503A etc. associated with the second wireless connection. Alternatively or in addition, this step 406 can include configuring software on the access point device side to be able to process requests and issue responses associated with the second wireless connection. Yet alternatively, this step can include issuing responses (e.g., association response) to the received request (e.g., association request). For example, the issued response can indicate that the received request has been accepted/granted (e.g., success indication in the association response).

Notably the first wireless connection is in the established state at the access point device side endpoint, while the access point device side endpoint for the second wireless connection is created at step 406. According to certain conventional technique, when the access point device side endpoint for the second wireless connection is created (e.g., upon receiving connection request such as association request from MAC address of the client that is already connected), the access point device side endpoint for the first wireless connection (e.g., earlier established wireless connection for the client from whose MAC address the new connection request is received) is terminated. For example, in an embodiment data structures associated with the first wireless connection are deleted and those associated with the second wireless connection are created (e. g., data structures 501A, 502A, 503A etc.). Alternatively, the data structures associated with the first wireless connection are assigned to the second wireless connection and now store data associated with the second wireless connection. Yet alternatively, the access point device discards any data packets (e.g., 802.11 data frames other than those used for higher layer authentication) received from the client device's address until state of the second wireless connection at the access point device side endpoint reaches Data Exchange state (e.g., state 206).

According to the present invention, the first wireless connection is maintained in the established sate at the access point device side endpoint when the access point device side endpoint for the second wireless connection is created. In an embodiment according to the present invention, the access point device continues to process and accept (e.g., upon passing the cryptographic authentication check using the first secret key) any data packets (e.g., 802.11 data frames even other than those used for higher layer authentication) received from the client device's address, even if the state of the second wireless connection at the access point device side endpoint has not reached Data Exchange state (e.g., state 206). In an embodiment, the access point device uses the first secret key to decrypt the encrypted 802.11 data frames received from the client device's address. In an alternative embodiment, the access point device uses the first secret key to perform cryptographic authentication check on the 802.11 data frames received from the client device's address. Alternatively or in addition, the access point device continues to transmit protected data packets (e.g., 802.11 data frames protected using the first secret key) to the client's address even if the state of the second wireless connection at the access point device side endpoint has not reached Data Exchange state (e.g., state 206). The access point device uses the first secret key to protect (e.g., encrypt and/or provide cryptographic authentication for) the 802.11 data frames transmitted to the client device's address.

The method 400 can also verify at step 408 whether the first wireless connection is in the established state at the client device side endpoint subsequent to the receiving the request for establishing the wireless connection at the access point device. In an embodiment, if the verifying indicates that the first wireless connection is in the established state at the client device side endpoint, it can be inferred that the request received in the step 404 was a spoofed request, e.g., intended to inflict deadlock DOS attack. In this case, the first wireless connection is maintained (e.g., maintained in the Data Exchange state). Thus, the access point device continues to process and accept (e.g., upon passing the authentication check using the first secret key) any data packets (i.e., 802.11 data frames even other than used for higher layer authentication) from the client device's address. The access point device uses the first secret key to decrypt and/or authenticate data packets received from the client device's address. The access point device also continues to transmit protected data packets (e.g., 802.11 data frames protected using the first secret key) to the client device's address. The first secret key is used to encrypt and/or authenticate protected data packets transmitted to the client device's address.

In this embodiment, if the verifying indicates that the first wireless connection is in the established state at the client device side endpoint, the access point device side endpoint for the second wireless connection is terminated. The terminating can include erasing and/or deleting data structures (e.g., 501A, 502A, 503A etc.) associated with the second wireless connection from memory of the access point device. Alternatively or in addition, the terminating can include configuring software associated with the endpoint to cease to respond to messages coming from the client device's address as part of the second wireless connection establishment process. Examples of such messages can be EAPOL start message from the client's address which initiates higher layer authentication, higher layer authentication related messages etc.

Alternatively, in an embodiment, if the verifying indicates that the first wireless connection is not in the established state at the client device side endpoint, it can be inferred that the request received in the step 404 is a legitimate request, e.g., the client indeed intends to initiate the second wireless connection (e.g., because is has lost the first wireless connection due to rebooting, handoff, error etc.). In this case, the first wireless connection is terminated at the access point device side endpoint. For example, the terminating can include deleting or erasing data structures (e.g., 501A, 502A, 503A etc.) associated with the first wireless connection from memory of the access point device. Alternatively or in addition, the terminating can include configuring software associated with the access point device side endpoint to cease to accept data packets (e.g., 802.11 frames permitted to be exchanged in the Data Exchange state) from the client device's address, and/or transmit data packets to the client device's address, for example, until state of the second wireless connection at the access point device side endpoint reaches the Data Exchange state. Yet alternatively or in addition to, the terminating can include discontinuing the use of the first secret key to encrypt, decrypt or authenticate the protected 802.11 frames exchanged between the access point device and the client device.

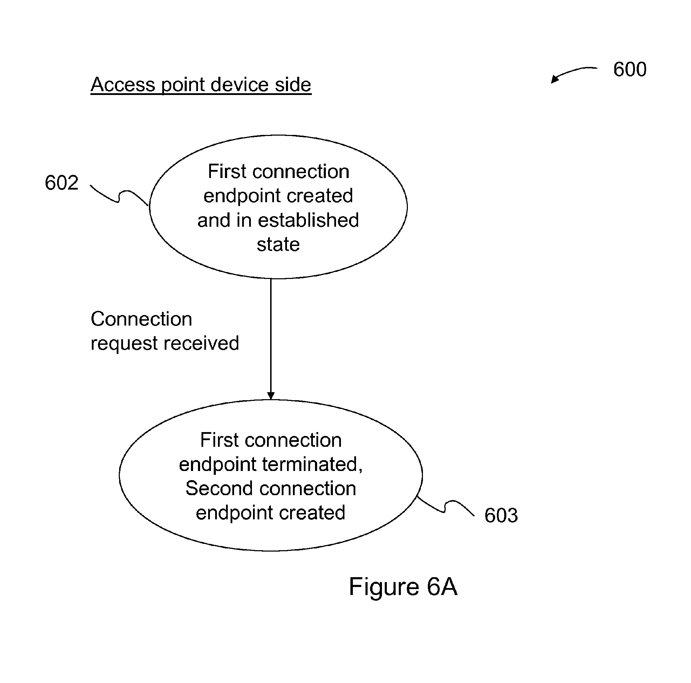

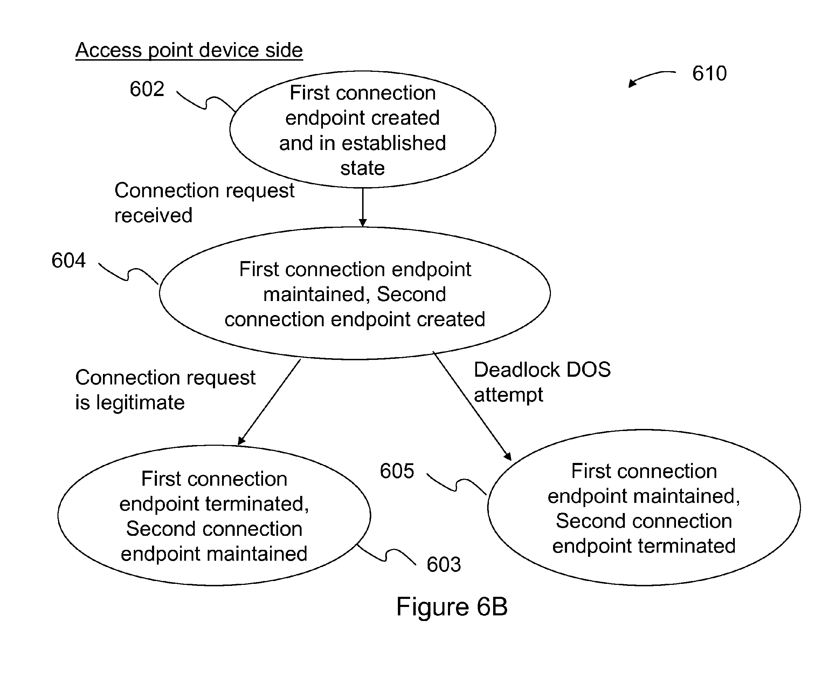

Method according to an embodiment of the present invention is illustrated by way of exemplary state machine diagrams in Figures 6A and 6B. These diagrams are merely examples, and should not unduly limit scope of the claims herein. The state diagram 600 in Figure 6A illustrates certain conventional method. The states illustrated are states at the access point device side endpoint. As shown, upon receiving a connection request from the client's address for which one wireless connection (e.g., first wireless connection) is already established at the access point side endpoint, the state machine transitions from state 602 (First connection endpoint created and in established state) to state 603 (First connection endpoint terminated, Second connection endpoint created). The conventional method is vulnerable to deadlock DOS attacks as illustrated and described with respect to Figure 3 and throughout the present specification.

The state diagram 610 in Figure 6B shows certain method according to an embodiment of the present invention. The states illustrated are states at the access point device side endpoint. As shown, upon receiving a connection request from the client's address for which one wireless connection (e.g., first wireless connection) is already established at the access point side endpoint, the state machine transitions from state 602 (First connection endpoint created and in established state) to state 604 (First connection endpoint maintained, Second connection endpoint created). For example, the first connection endpoint can indicate the state as Data Exchange state (e.g., 206 of state machine 200), while the second connection endpoint can indicate the state as Authenticated and Associated (e.g., 203 of state machine 200). In an embodiment, the establishment process for the second wireless connection (e.g., as illustrated by example state machine 200) proceeds after the second wireless connection endpoint is created.

Moreover, if the connection request is detected to be a spoofed connection request (e.g., an attempt to inflict DOS attack), the second connection endpoint is terminated (state 605) and the first wireless connection endpoint is maintained (state 605). On the other hand, if the connection request is determined to be legitimate, the first wireless connection endpoint is terminated (state 603). The method illustrated in the state diagram 610 according to an embodiment of the present invention is advantageously able to avoid deadlock DOS attacks.

In the foregoing description and throughout the present specification, in an embodiment, an access point device can refer to a device including all the functions for forwarding data packets between wired and wireless portions of the LAN. Such an access point device is sometimes called as a "thick" access point or an "autonomous" access point. A thick access point includes one or more radio transceiver modules for transmitting and receiving wireless signals. It can include a wired network interface for connecting to the wired portion of the LAN. The thick access point can include software and hardware for performing 802.11 MAC layer functions such as link management functions (e.g., authentication, association), higher layer authentication functions (e.g., 802.1x authenticator function), wireless data encryption and decryption functions, etc.

Alternatively, in the foregoing description and throughout the present specification, in an embodiment, an access point device can refer to a system comprising a transceiver subsystem (e.g., transceivers 504) and a controller subsystem (e.g., controller 505). In this embodiment, the transceiver subsystem can includes one or more radio transceiver modules for transmitting and receiving wireless signals. The functions such as link management functions (e.g., authentication, association), higher layer authentication functions (e.g., 802.1 x authenticator function), and wireless data encryption and decryption functions can be provided in the controller subsystem. This type of configuration of the access point device can sometimes be referred as "tunnel" architecture, "thin" access point architecture, controller architecture etc. For example, the transceiver subsystem receives wireless signals, decodes the wireless signals into 802.11 wireless frames, and transfers the extracted frames to the controller subsystem for further processing and forwarding. The transceiver subsystem receives the 802.11 frames to be transmitted over wireless medium from the controller subsystem, prepares wireless signals for transmitting the frame, and transmits the wireless signals on the wireless medium. The controller subsystem can communicate with one or more transceiver subsystems over a computer network 506 using protocols such as LWAPP (lightweight wireless access point protocol), CAPWAP (control and provisioning of wireless access points) etc. The controller subsystem can communicate with one or more transceiver subsystems.

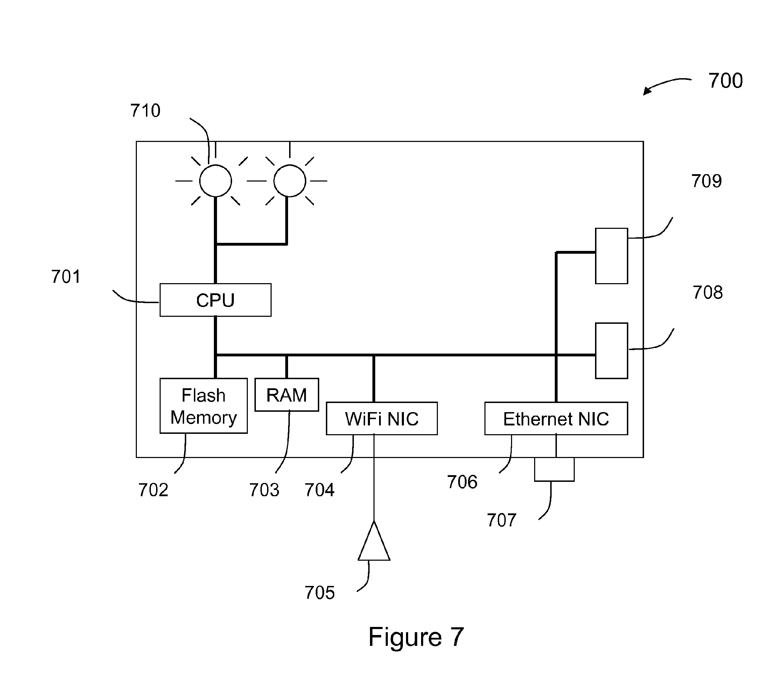

An exemplary hardware diagram of the transceiver subsystem 700 is shown in Figure 7. This diagram is merely an example, which should not unduly limit the scope of the claims herein. One of ordinary skill in the art would recognize many variations, alternatives, and modifications. As shown, the transceiver subsystem can have a central processing unit (CPU) 701, a flash memory 702 where at least a portion of software for the transceiver subsystem functionality can reside, and a RAM 703 which serves as volatile memory during program execution. The transceiver subsystem can have one or more radio transceiver modules comprising one or more 802.11 wireless network interface cards (NiCs) 704 and one or more antennas 705 coupled to the wireless NiCs. Each of the wireless NiCs 704 can operate in IEEE 802.11a, b, g, n mode, or mixtures thereof. Moreover, the transceiver subsystem can have an Ethernet NIC 706 which performs Ethernet physical and MAC layer functions, an Ethernet jack 707 such as RJ-45 socket coupled to the Ethernet NIC for connecting the transceiver subsystem to wired LAN with optional power over Ethernet or POE. It can have a serial port 708 which can be used to flash/configure/troubleshoot the transceiver subsystem. A power input 709 can also provided. One or more light emitting diodes (LEDs) 710 can be provided to convey visual indications (such as device working properly, error condition, and so on).

In an embodiment the controller subsystem can be provided as a software module in network infrastructure devices such as routers, switches, layer 3 switches, servers etc. In an alternative embodiment, the controller subsystem can be provided in a dedicated appliance comprising one or more processors and at least one wired NIC. Moreover the appliance can comprise one or more memories for storing software for the controller functionality on and off run time.

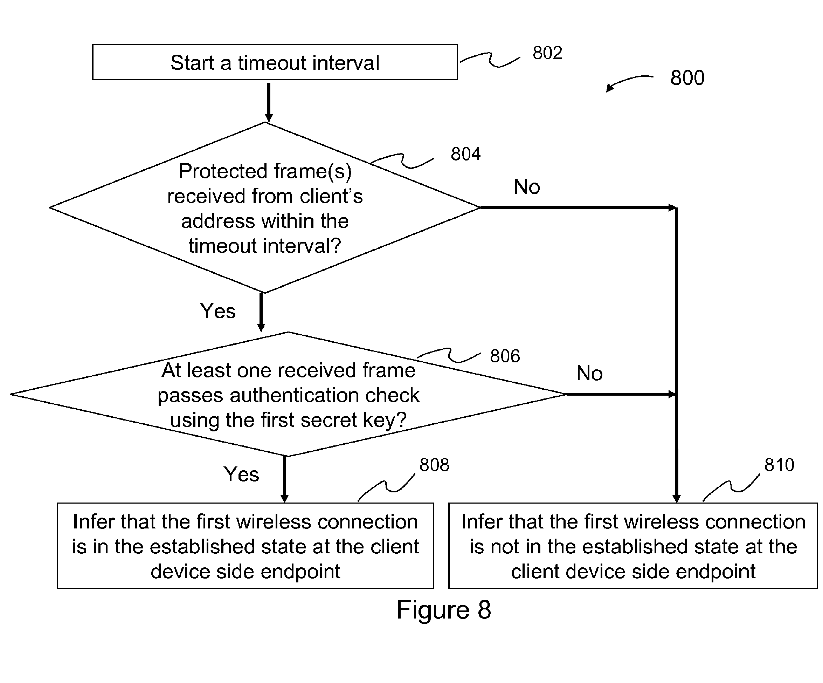

Several alternative embodiments can be used for the verifying step 408 of the method 400 (and also for the verifying step 1006 of the method 1000). An exemplary flowchart for a process 800 for verifying whether the first wireless connection is in the established state at the client device side endpoint according to an embodiment of the present invention for is illustrated in Figure 8. This flowchart is merely an example and should not unduly limit the scope of the claims herein. As shown, step 802 can start a timeout interval.

Step 804 can determine if at least one protected 802.11 frame is received from the client's address during the timeout interval. In an embodiment, the 802.11 protected frame can refer to a frame which at least facilitates cryptographic authentication check. For example, the cryptographic authentication can be provided using MIC (Message Integrity Code) in accordance with an IEEE 802.11i protocol. Other techniques of providing cryptographic authentication can also be used (e.g., message digest (MD5), SHA etc.). Preferably, the client device transmits the protected 802.11 frames when the state of the wireless connection is the established state at the client device side endpoint. The secret key derived during connection establishment (e.g., in state 205 of the state machine 200, for example, using EAPOL 4-way handshake) can be used for providing cryptographic authentication. For example, the first secret key can be used to provide cryptographic authentication for the protected frame transmitted by the client device over the first wireless connection.

In an embodiment, the protected 802.11 frame can be a data frame transmitted by the client over the wireless connection whose state at the client is the Data Exchange state. As merely an example, such data frame includes a Type field in the 802.11 MAC header being indicative of data (e.g., value of 10 for the Type field bits b3 and b2) and a Type field in the LLC (Logical Link Control) header indicative of the fact that the frame is exchanged in the Data Exchange state (e.g., Type field in the LLC header indicating that the data packet is not an 802.1x packet). As another example, the protected 802.11 frame can be a protected management frame in accordance with an IEEE 802.11w protocol.

If the protected 802.11 frame is received from the client's address during the timeout interval, cryptographic authentication check can be performed on the received frame (step 806). For example, the access point device can check using the first secret key whether the correct value of MIC is found in the received frame. Moreover, in an embodiment, the access point device can decrypt the data frame (e.g., using the first secret key) before or along with verifying the MIC. More details on the cryptographic authentication check can be found in the IEEE 802.11i and 802.11w protocol descriptions, and throughout the present specification.

If the cryptographic authentication check passes (e.g., the MIC is proper, the frame is properly decrypted etc.), the received frame can be inferred to be transmitted by the client device proper and not to be a spoofed one. It can thus be inferred that the first wireless connection is in the established state at the client device side endpoint (step 808).

On the other hand, if no protected frame is received during the timeout interval it can be inferred that the first wireless connection is not in the established state at the client device side endpoint (step 810). Alternatively, if every protected frame received at step 804 fails the authentication check at step 806, it can be inferred that the first wireless connection is not in the established state at the client device side endpoint (step 810).

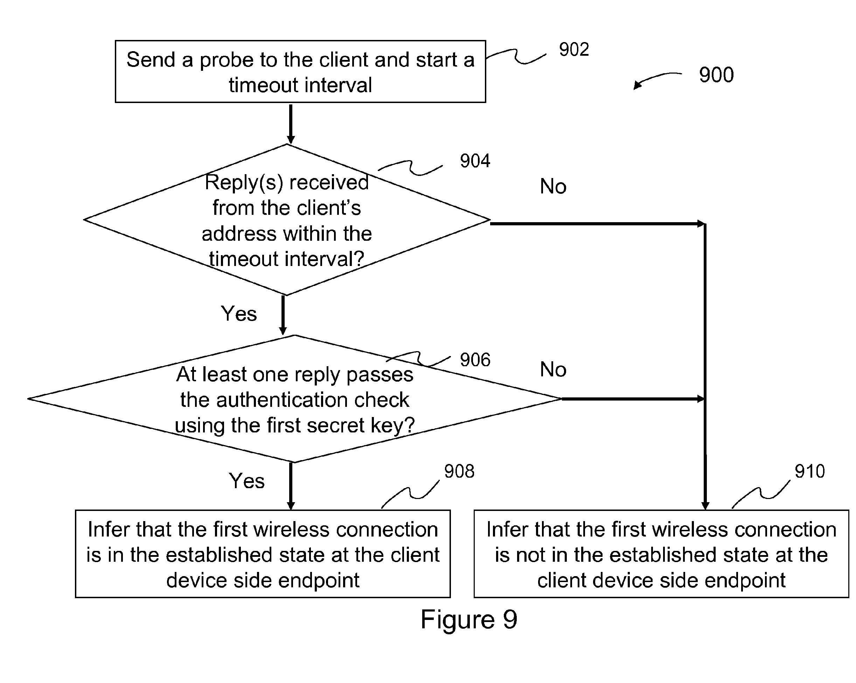

An exemplary flowchart for a process 900 for verifying whether the first wireless connection is in the established state at the client device side endpoint according to an embodiment of the present invention is illustrated in Figure 9. This flowchart is merely an example and should not unduly limit the scope of the claims herein. As shown, step 902 can send a probe to the client and start a timeout interval. For example, a probe can be a management frame or a data frame. Preferably, cryptographic authentication is provided for the probe using the first secret key. For example, the probe can be a protected data frame or a protected management frame. Preferably, the client device should respond to the probe if the state of the first wireless connection at the client device side endpoint is the established state (e.g., Data Exchange state 206).

Step 904 can determine if at least one reply to the probe is received from the client device's address during the timeout interval. If at least one reply is received from the client device's address during the timeout interval, a cryptographic authentication check can be performed on the received reply, for example, using the first secret key (step 906). For example, a reply can be included in a protected data frame or a protected management frame. If the cryptographic authentication check passes, the received reply can be inferred to be transmitted by the client device proper and not to be a spoofed one. It can thus be inferred that the first wireless connection is in the established state at the client device side endpoint (step 908). On the other hand if no reply is received during the timeout interval it can be inferred that the first wireless connection is not in the established state at the client device side endpoint (step 910). Alternatively, if every reply received at step 904 fails the authentication check at step 906, it can be inferred that the first wireless connection is not in the established state at the client device side endpoint (step 910).

Other alternatives for verifying whether the first wireless connection is in the established state are possible and will be apparent to persons with ordinary skill in the art based upon the teachings of the present specification. As merely an example, an alternative embodiment can include determining whether the connection request is a MAC spoofed request, i.e., determining whether the connection request is transmitted by a device other than the client device even if it includes the client device's wireless MAC address as the originator of the request.

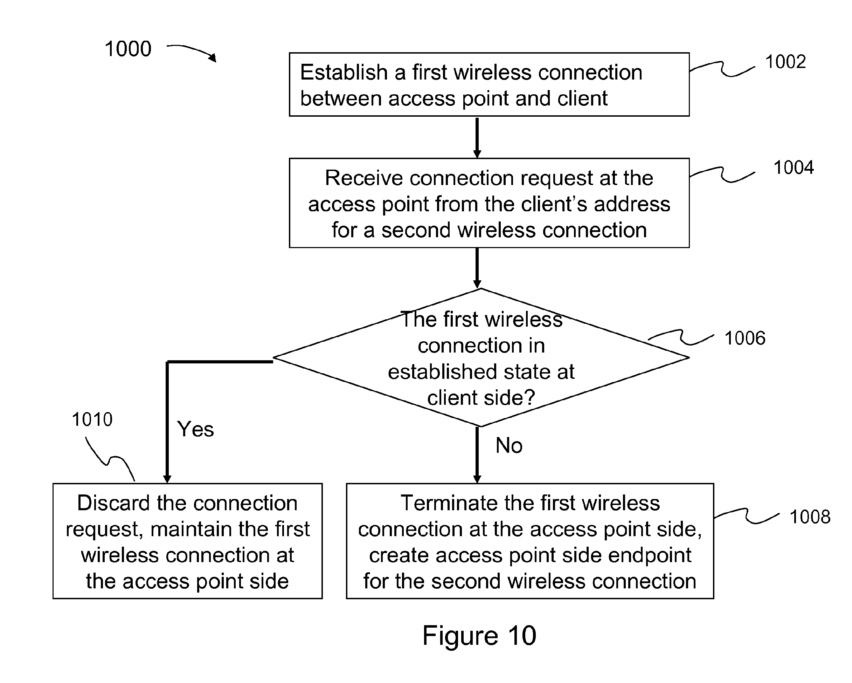

According to an alternative embodiment of the present invention a method is provided for protecting wireless communications from denial of service attacks. A flowchart for this method 1000 is illustrated in Figure 10. This flowchart is merely an exemplary flowchart which should not unduly limit the scope of the claims herein. According to the method 1000, a first wireless connection can be established between an access point device and a client device (step 1002). For example, the establishing process can be a connection establishment process operating as per or substantially similar to the connection state machine 200 illustrated and described with respect to Figure 2 and throughout the present specification.

At step 1004, the method can receive at the access point device a request for establishing a second wireless connection between the access point device and the client device. For example, the request can comprise an association request including identity of the client device as originator of the request (e.g., wireless MAC address of the client device in the source address field of the connection request). As another example, the request can comprise a layer 2 authentication request. As yet another example, the request can comprise an EAPOL start request. The layer 2 authentication request or the EAPOL start request can each include identity of the client device as originator of the request (e.g., wireless MAC address of the client device in the source address field of the connection request). Notably, the request is received while the state of the first wireless connection at the access point device side endpoint being the established state. In this embodiment, the request may be originated by the client device (e.g., after rebooting, loss of connection, handoff etc.), or it may be originated by an attacker device to inflict deadlock DOS attack as illustrated and described with respect to Figure 3 and throughout the present specification. In an embodiment, the method according the present invention can differentiate between the former and the latter cases as described throughout the present specification and more particularly below. The method can thus protect wireless communications from deadlock DOS attacks.

The method can also verify at step 1006 whether the first wireless connection is in the established state at the client device side endpoint subsequent to the receiving the request for establishing the wireless connection at the access point device. In an embodiment, if the verifying indicates that the first wireless connection is in the established state at the client device side endpoint, it can be inferred that the request received in the step 1004 was a spoofed request, e.g., intended to inflict deadlock DOS attack. In this case (step 1010), the access point device side endpoint for the first wireless connection is maintained (e.g., maintained in the Data Exchange state). Moreover, the request for establishing the second wireless connection is discarded. On the other hand, if the verifying indicates that the first wireless connection is not in the established state at the client device side endpoint, it can be inferred that the request received in the step 1004 was a legitimate request, e.g., the client indeed intends to initiate the second wireless connection (e.g., because is has lost the first wireless connection due to rebooting, handoff, error etc.). In this case (step 1008), the first wireless connection is terminated at the access point device side endpoint. Moreover, access point device side endpoint is created for the second wireless connection.

It should be appreciated that the specific steps described in various methods and illustrated in various flowcharts and state machines provide specific processes of protecting wireless communication from DOS attacks according to embodiments of the present invention. Other sequences of steps may also be performed according to alternative embodiments. For example, alternative embodiments of the present invention may perform the steps outlined above in a different order. Moreover, the individual steps may include multiple sub-steps that may be performed in various sequences as appropriate to the individual step. Furthermore, additional steps may be added or removed depending on the particular applications. One of ordinary skill in the art would recognize many variations, modifications, and alternatives based on the teachings of this present specification.

Although specific embodiments of the present invention have been described, it will be understood by persons with ordinary skill in the art that there are other embodiments that are equivalent to the described embodiments. As merely an example, while the specific embodiments have been described for infrastructure mode wireless connection (e.g., wireless connection between AP and client), the techniques of the present invention can also be used for ad hoc wireless connection (e.g., wireless connection between two client devices). As another example, teachings of the present invention can be used for wireless connections operating according to different versions/revisions of the IEEE 802.11w protocol, their proprietary implementations (e.g., Management Frame Protection (MFP)), modifications, or other protocols which operate in a manner substantially similar to the IEEE 802.11w protocol. As yet another example, techniques of the present invention can be used in variety of access point architectures such as thin access point architectures (for example, LWAPP, CAPWAP etc.), thick access point architectures (e.g., standalone access point), and others. As further example, a connection request can include association request, layer 2 authentication request, EAPOL start request. As a further example, different techniques, including but not limited to AES, TKIP (Temporal Key Integrity Protocol), and WEP (Wired Equivalent Privacy), can be used for protecting the 802.11 frames (e.g., for transmitting and receiving). Other alternative embodiments are also possible. Accordingly, it is to be understood that the invention is not to be limited by the specific illustrated embodiments, but only by the scope of the appended claims.

As described herein, wireless network uses radio signals for information transfer. Since wireless signals cannot be confined to physical boundaries of premises, they often cause a concern to the owner of the wireless computer network. In particular the owners are concerned about spillage of wireless signals from the computer network into outside of the premises (e.g., home, office, building, campus etc.) as the spillage of signals can be used for unauthorized access to the wireless computer network. For example, unauthorized wireless clients (e.g., neighbor's clients or other clients in parking lot, street etc.) can access the computer network using this spillage. Also authorized clients can accidentally or deliberately attempt connection to external (e.g., neighbor's) computer networks using radio spillage of those networks. It is also common to find wireless APs connected to the LAN by employees without the knowledge of administrator. Whether such action is inadvertent or malicious, such APs may not employ the correct security controls and hence their signal spillage may provide easy avenue for hackers outside the LAN premises to gain unauthorized access to the LAN.

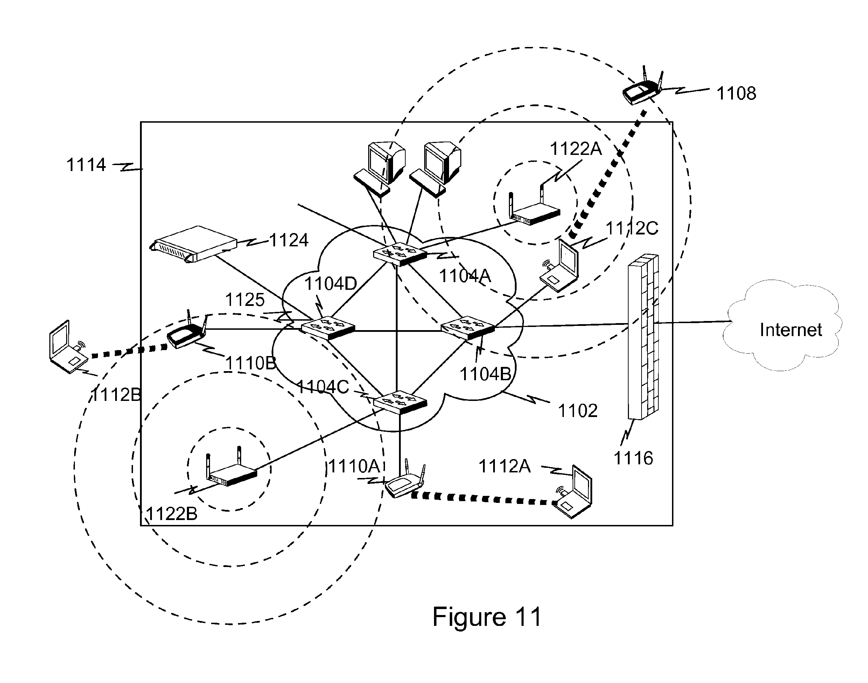

Figure 11 illustrates an exemplary local area network (LAN) of computing systems that can facilitate an environment for certain other embodiments of the present invention to be practiced. This diagram is merely an example which should not unduly limit the scope of the claims herein.

As shown, a core transmission infrastructure 1102 of the LAN can include various transmission components, e.g., hubs, switches, and routers (1104A-1104D), interconnected using wires. The LAN core 1102 can be connected to the Internet through the firewall (1116). In a typical deployment, the LAN core 1102 comprises one or more network segments. In an embodiment, a network segment can be an IP "subnetwork" (called "subnet"). Each subnet can be identified by a network number (e.g., IP number and subnet mask) and a plurality of subnets are interconnected using router devices. In an embodiment, a network segment can be a VLAN (Virtual LAN). Notably, one or more of the network segments can be geographically distributed (e.g., in offices of a company in different geographic locations). The geographically distributed segments can be interconnected via virtual private network (VPN).

In this embodiment, a wireless extension of the LAN core 1102 is also provided. For example, one or more authorized APs 1110A can be connected to the LAN core 1102. In this configuration, authorized computing devices 1112A (such as desktop computers, laptop computers, handheld computers, PDAs, etc.) equipped with radio communication can wirelessly connect to LAN through the authorized AP 1110A. Notably, authorized APs connected to the LAN provide wireless connection points on the LAN. Note that the Institute of Electrical and Electronics Engineers (IEEE) 802.11 family of standards such as 802.11a,b,g,n,i,w etc.(referred as WLAN or WiFi) or another type of wireless network format (e.g., UWB, WiMax, Bluetooth, etc.) can be used to provide the wireless protocols.

Figure 11 also shows that an unauthorized AP 1110B can be connected into the LAN (e.g., using connection port or access port on the switch) by unassuming or malicious user of the LAN. The radio coverage of an unauthorized AP 1110B can spill outside the region of operation 1114 of the LAN (e.g., building, office, campus, and/or premises within which the LAN operates). Using this radio spillage unauthorized devices 1112B (e.g., user on street, parking lot, neighboring premises) can access the LAN through the unauthorized AP. Notably, unlike the authorized AP 1110A, the unauthorized AP 1110B may not be managed by the administrator of the LAN and hence may not employ the appropriate security measures (e.g., authentication, encryption etc.) while allowing the users to access the LAN through itself. The unauthorized AP 1110B can operate as a layer 2 bridging device or as a router/NAT (network address translator) device. In alternative embodiment, the authorized AP 1110A can be misconfigured and can create security vulnerability. Unauthorized users (such as wireless devices 1112B) can also gain unauthorized wireless access to the LAN via the misconfigured AP (e.g., if the configuration on the authorized AP 1110A were to be improperly set thereby opening a security hole).

In yet an alternative embodiment, the radio coverage of an AP 1108 operating outside the premises 1114 of the LAN, can spill inside the LAN premises. For example, the AP 1108 can be an AP operating in the neighboring premises, an AP in a parking lot or a street, a hacker's AP and like. This radio spillage may lead to authorized wireless devices 1112C in the LAN connecting unwittingly or deliberately to such an AP, thereby creating security vulnerability for the device 1112C and/or the LAN 1102.

In accordance with an aspect of the present invention, a security monitoring system can detect undesirable wireless communication of devices associated with the LAN. Moreover, the system can disrupt the undesirable wireless communication thus preventing security breaches over it. The security monitoring system can include one or more RF sensor devices (e.g., sensor devices 1122A and 1122B, each generically referenced herein as a sniffer 1122) disposed within and/or in a vicinity of the region of operation of the LAN. In an embodiment shown in Figure 11, sniffer 1122 can be connected to the LAN core 1102 using wired connection. In another embodiment, sniffer 1122 can be connected to the LAN core 1102 using a wireless connection.

In an embodiment, a sniffer 1122 is able to monitor wireless activity in a subset of the region of operation of the LAN. Wireless activity can include any transmission of control, management, or data packets between an AP and one or more wireless stations, or among one or more wireless stations.

In general, sniffer 1122 can listen to a radio channel and capture transmissions on that channel. In an embodiment, sniffer 1122 can cycle through multiple radio channels on which wireless communication could take place. On each radio channel, sniffer 1122 can wait and listen for any ongoing transmission. In an alternative embodiment, sniffer 1122 can operate on multiple radio channels simultaneously.

Whenever a transmission is detected, sniffer 1122 can collect and record the relevant information about that transmission. This information can include all or a subset of information gathered from various fields in a captured packet. In another embodiment, a receive signal strength indicator (RSSI) associated with the captured packet can also be recorded. Other information such as the day and the time the transmission was detected can also be recorded. The information collected by one or more sniffers can be used to detect undesirable wireless communication.

A sniffer 1122 can transmit packets over the wireless medium. These packet transmissions can facilitate disrupting of the detected undesirable wireless communication according to an aspect of the present invention.

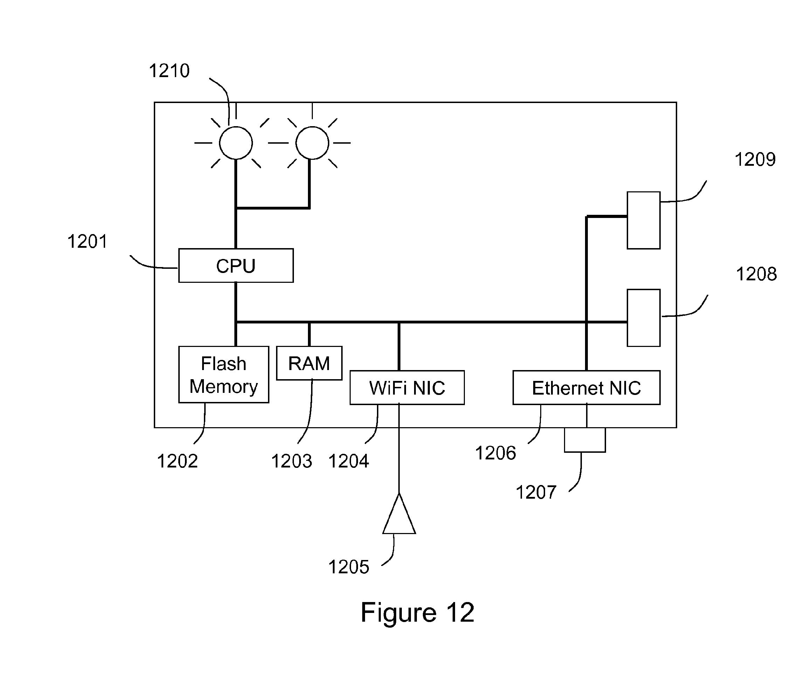

An exemplary hardware diagram of the sniffer is shown in Figure 12. This diagram is merely an example, which should not unduly limit the scope of the claims herein. One of ordinary skill in the art would recognize many variations, alternatives, and modifications. As shown, sniffer 1122 can have a central processing unit (CPU) 1201, a flash memory 1202 where the software code for sniffer functionality resides, and a RAM 1203 which can serve as volatile memory during program execution. The sniffer 1122 can have one or more 802.11 wireless network interface cards (NiCs) 1204 which perform radio and wireless MAC layer functionality and one or more of dual-band (i.e., for transmission detection in both the 2.4 GHz and 5 GHz radio frequency spectrums) antennas 1205 coupled to the wireless NICs. Each of the wireless NICs 1204 can operate in 802.11a, 802.11b, 802.11g, 802.11b/g or 802.11a/b/g mode. In an embodiment, alternatively or in addition to, at least one of the NICs can operate in 802.11n mode. Moreover, the sniffer 1122 can have an Ethernet NIC 1206 which performs Ethernet physical and MAC layer functions, an Ethernet jack 1207 such as RJ-45 socket coupled to the Ethernet NIC for connecting the sniffer device to wired LAN with optional power over Ethernet or POE, and a serial port 1208 which can be used to flash/configure/troubleshoot the sniffer device. A power input 1209 is also provided. One or more light emitting diodes (LEDs) 1210 can be provided on the sniffer device to convey visual indications (such as device working properly, error condition, undesirable wireless activity alert, and so on).

In an embodiment, sniffer 1122 can be built using a hardware platform similar to that used to build an AP, although having different functionality and software. In an embodiment, both the sniffer and the AP functionality can be provided in the same hardware platform. In another embodiment, the sniffer functionality is provided as software that is run on one or more computers in the wireless network.

Server 1124 (also called "security appliance") can be coupled to LAN 1102 using a connection port 1125. In an embodiment, each sniffer 1122 can convey its information about detected wireless activity to server 1124 (i.e., over the LAN). Server 1124 can then analyze that information, store the results of that analysis, and process the results. In an embodiment, sniffer 1122 may filter and/or summarize its information before conveying it to server 1124. Sniffer 1122 may also receive specific instructions from server 1124, e.g. tuning to specific radio channel, detecting transmission of specific packets on a radio channel, indication about undesirable wireless activity etc. In an alternative embodiment, the sniffer 1122 can operate as a standalone device without having to communicate with the server.

Preferably, the security system comprising sniffers 1122 and optionally server 1124 can detect unauthorized APs connected into the LAN core. Several techniques for detecting such unauthorized APs are described in the U.S. Application Publication 20050195753 to Chaskar et al. entitled "Method and system for detecting wireless access devices operably coupled to computer local area networks and related methods" published September 8, 2005; the U.S. Application Publication 20060193300 to Rawat et al. entitled "Method and apparatus for monitoring multiple network segments in local area networks for compliance with wireless security policy" published August 31, 2006; and the U.S. Patent 7,154,874 to Bhagwat et al. entitled "Method and system for monitoring a selected region of an airspace associated with local area networks of computing devices" December 26, 2006; each of which is herein incorporated by reference.

Preferably, when the unauthorized AP (e.g., 1110B) is detected, a misconfigured AP is detected (e.g., an authorized AP 1110A whose configuration is not properly set), a misassociation is detected (e.g., wireless connection between the authorized client 1112C and external AP 1108), an unauthorized association is detected (e.g., external client 1112B connecting via authorized AP 1110A to the LAN) and like, the security monitoring system can disrupt such wireless communication to prevent security breach over it. Certain conventional method for a sniffer in the security monitoring system to disrupt such wireless communication is to disconnect undesirable wireless link between the AP and the client station by constructively using deauthentication and disassociation procedures provided in the IEEE 802.11 MAC standard. The procedures, the frame formats and other information about the IEEE 802.11 MAC standard can be found in the publication of IEEE titled "Part 11: Wireless LAN Medium Access Control (MAC) and Physical Layer (PHY) Specifications", 1999 Edition, which is herein incorporated by reference. For example, the deauthentication procedure or the disassociation procedure can be constructively utilized by the sniffer 1122 to break the wireless link (connection) between unauthorized AP 1110B and a client 1112B, wireless link between authorized client 1112C in the LAN and neighbor's AP 1108 etc.

As merely an example, in order to disrupt wireless communication between the AP 1110B and the client 1112B, the sniffer 1122B can use deauthentication procedure. In a typical deauthentication process, the sniffer can transmit spoofed deauthentication packets (frames) on the same channel on which the wireless link between the AP and the client operates. For example, the sniffer can generate one or more IEEE 802.11 frames with type field set as "management" and subtype field set as "deauthentication". Moreover the source address field is set to the wireless MAC address of the AP 1110B (that is, the sniffer spoofs the wireless MAC address of the AP 1110B), the destination address field is set to the wireless MAC address of the client 1112B (or, to a broadcast adddress of hexadecimal FF:FF:FF:FF:FF:FF), and the BSSID field set to a value same as that used by the frames transmitted by the AP 1110B to the client 1112B or vice versa (which usually is the wireless MAC address of the AP). When the client 1112B receives this frame, it thinks that the AP 1110B (e.g., based on the source MAC address field) wants it to disconnect and the client disconnects from the AP. Alternatively, the source address field can be set to the wireless MAC address of the client 1112B (that is, the sniffer spoofs the wireless MAC address of the client) and the destination address field can be set to the wireless MAC address of the AP 1110B. This results in the AP thinking that the client wants to disconnect and the AP disconnects the client.

It would be appreciated that the use of deauthentication process or diassociation process by the sniffer 1122 to disrupt undesirable wireless communication would not be viable if the undesirable wireless connection itself uses 802.11w, its modifications or its alternatives, to make the undesirable wireless connection itself resistant to spoofed deauthentication or disassociation messages. In this embodiment, the deadlock problem described with respect to Figure 3 can be exploited by the security monitoring sniffer 1122 to disrupt undesirable wireless communication.

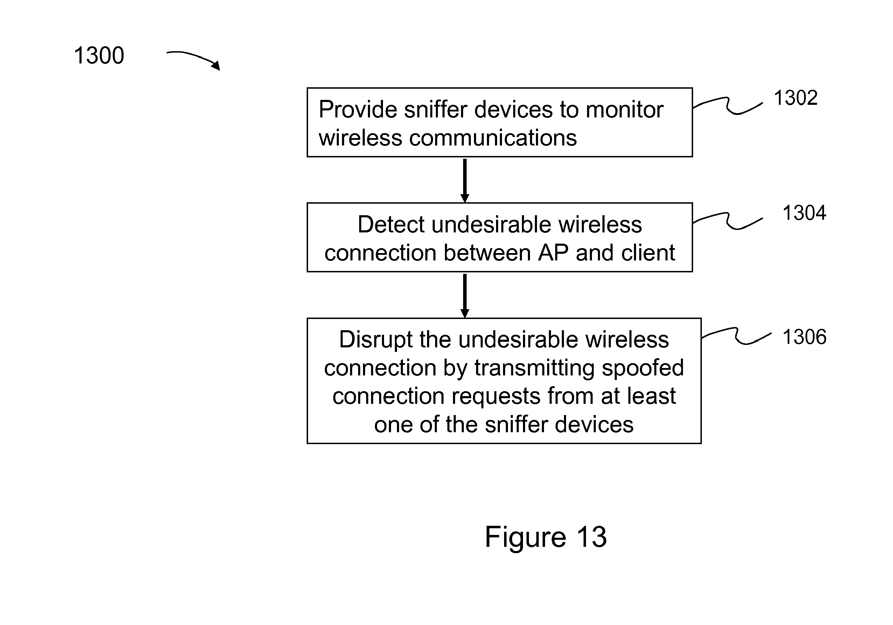

Figure 13 illustrates an exemplary flowchart for method 1300 for disrupting undesirable wireless communication according to an embodiment of the present invention. This diagram is merely an example which should not unduly limit the scope of the claims herein. As shown, step 1302 can provide one or more sniffer devices (e.g., sniffers 1122) to monitor wireless communications in a wireless network (e.g., LAN with wireless extensions as shown in Figure 11). Preferably the sniffer devices are spatially disposed over the geographic region of the wireless network.

At step 1304, the method can detect a wireless connection established between an access point device and a client device. For this, in a specific embodiment, the sniffer can capture one or more packets (e.g., 802.11 frames) transmitted on a wireless medium. The selected MAC addresses in the captured packet (e.g., one or more of source address, destination address, transmitter address, receiver address, BSSID address etc.) can be identified as the wireless MAC addresses of the access point device and the client device, respectively. In some embodiments the TO DS and FROM DS bits in the 802.11 MAC header of the captured packet can also be used in identifying the AP and the client MAC addresses. As merely an example, if the TO DS bit in the 802.11 MAC header of the packet is detected to be a binary 1 and the FROM DS bit is detected to be a binary 0, it can be inferred that the packet was transmitted from the client to the AP, and further that the BSSID field indicates the wireless MAC address of the AP and the source address field indicates the wireless MAC address of the client. Moreover, from certain fields in the captured packet, it can be inferred that the state of the wireless connection at the AP and the client each being a Data Exchange state, that is the wireless connection is fully established. As merely an example, it can be inferred from the Type field in the 802.11 MAC header being indicative of data (e.g., value of 10 for the Type field bits b3 and b2) that the packet is a data packet and it can be inferred from the Type field in the LLC (Logical Link Control) header that the packet is exchanged in Data Exchange state unlike Authenticated and Associated state in which also packets of type data are exchanged for the purpose of higher layer authenticating (e.g., Type field in the LLC header indicating that the data packet is not an 802.1x packet). In an alternative embodiment, the sniffer can detect the wireless connection based on information received from other systems in the network. As merely an example, the other systems in the network that can provide this information include access point controller, network management system etc.

In this embodiment according to the present invention, the wireless connection established between the AP and the client is configured for not being disconnected upon receiving a spoofed disconnection request transmitted from a wireless device (e.g., a sniffer device 1122, a DOS attacker device etc.) other than the access point device and the client device. In an embodiment, the spoofed disconnection request can includes the access point's (AP's) identity as the identity of the originator of the request (e.g., AP's wireless MAC address as source address in deauthentication transmitted to the client's wireless MAC address as destination address), even though the disconnection request is in fact transmitted by a device other than the AP (e.g., a sniffer device 1122, a DOS attacker device etc.). Alternatively, the spoofed disconnection request can includes the client's identity as the identity of the originator of the request (e.g., client's wireless MAC address as source address in deauthentication transmitted to the AP's wireless MAC address as destination address), even though the disconnection request is in fact transmitted by a device other than the client (e.g., a sniffer device 1122, a DOS attacker device etc.). The access point device or the client device is able to detect that such disconnection request received with the peer's identity (e.g., wireless MAC address) included in the request as the originator of the request (e.g., source address field of deauthentication) is a spoofed one (e.g., in fact originated or transmitted by device other than the peer) and disregard the request. Such a wireless connection can be resistant to DOS attacks. For example, the wireless connection can be provided using an IEEE 802.11w protocol described throughout the present specification. The validity of the disconnection request can then be checked using shared secret keys.

In this embodiment, the wireless connection so detected is undesirable. As merely an example, as shown in Figure 11, it can be a wireless connection unauthorized AP 1110B and a client 1112B, between authorized client 1112C in the wireless network and neighbor's AP 1108, and so on. Preferably the wireless connection needs to be disrupted by the security monitoring system to prevent security breach over it.

At step 1306 the method can disrupt the wireless connection established between the access point device and the client device by transmitting one or more spoofed connection requests from at least one of the sniffer devices. In an embodiment, the spoofed connection requests can comprise association request frames formatted in accordance with an IEEE 802.11 MAC protocol. More specifically, a source address in the association request frame transmitted (e.g., originated) by the sniffer device is set to a wireless MAC address of the client device (e.g., the sniffer device spoofs the client's wireless MAC address) and a destination address in the association request frame is set to a wireless MAC address of the access point device. Notably conventionally association request frame is used to start a new connection (e.g., as shown in the state diagram 200 in Figure 2), however according to an embodiment of the present invention it is used to disrupt the established wireless connection. In this embodiment, disrupting the established wireless connection includes obstructing the transfer of data packets between the AP and the client over the wireless connection.

In accordance with this embodiment of the present invention, the state machine in the AP upon receiving the association request goes to state 203 shown in Figure 2, that is, to a state of being Authenticated and Associated, but not Higher Level Authenticated. In this state, the AP does not accept any frames from client of type data (that is, other than authentication frames) as those frames are not allowed unless the state machine passes the state 205 shown in Figure 2. Moreover, in the state 203, the AP does not maintain the shared secret keys (e.g., DGTK, PTK etc.) as those are not allowed to be created before state machine passes the state 204. On the contrary, the state machine at the client still remains in the state of 206 (Data Exchange). In the Data Exchange state, the client maintains the shared secret keys and expects the AP to validate any disconnection requests with one or more of these keys. The states of the wireless connection at the AP and the client are thus out of synchronization. Alternatively, the state machines at the AP and the client are deadlocked as illustrated in Figure 3.

The wireless communication over the wireless link between the AP and the client is thus disrupted. For example, the AP and the client are obstructed from transferring data packets to each other as described. In an embodiment, this situation continues until, for example, the client detects that no response is received to its data packets, infers that the link is broken, and sends fresh association request which can then resynchronize the state machines at the AP and the client. After the link is re-established, another spoofed connection request from the sniffer can again put it in a deadlocked condition. In an embodiment, by sending a continuous stream of spoofed connection requests from the sniffer, the link can be kept deadlocked for most of the time and thus wireless communication between the AP and the client is disrupted.

It should be appreciated that the specific steps illustrated in Figure 13 provide a particular method of disrupting undesirable wireless communication according to an embodiment of the present invention. Other sequences of steps may also be performed according to alternative embodiments. For example, alternative embodiments of the present invention may perform the steps outlined above in a different order. Moreover, the individual steps may include multiple sub-steps that may be performed in various sequences as appropriate to the individual step. Furthermore, additional steps may be added or certain steps may be removed depending on the particular applications. One of ordinary skill in the art would recognize many variations, modifications, and alternatives based on the teachings of this present specification.

In an alternative embodiment, the present invention provides a system for disrupting undesirable wireless communication. The system can be implemented as a computing system comprising computer readable instructions (e.g., computer codes) stored in computer memory module (e.g., RAM, ROM, hard drive, networked drives, USB, flash etc.). The computer readable instructions can be executed by a processor module to perform the steps as in method 1300. The processor module can comprise one or more micro processing devices (e.g., microprocessor, microcontroller, digital signal processor etc.). The computing system according to an embodiment of the present invention also comprises a transmitter module. The transmitter module comprises one or more network interfaces (e.g., WiFi radio interfaces) which can transmit wireless signals. In an embodiment, the memory module, the processor module and the transmitter module are all provided within a sniffer apparatus (e.g., as shown in Figure 12). In an alternative embodiment a first portion of at least one of the memory module, the processor module, or the transmitter module is provided in a server device (e.g., server 1124 shown in Figure 11), and a second portion is provided in a sniffer apparatus. The server device can communicate with the sniffer apparatus over a computer network (e.g., LAN, VPN etc.). Other alternatives are also possible and will be apparent from the teachings of the present specification to those with ordinary skill in the art.

As described above embodiments of the invention are implemented where the wireless networking environment uses an IEEE 802.11 protocol, for example the IEEE 802.11w protocol. It will be appreciated that the present invention may be applied where the wireless networking environment uses protocols other than IEEE 802.11 protocols, provided that those protocols provide similar functionality as regards connection termination procedures. Any reference in this application to complying with an 802.11 standard should be understood as meaning compliance with an existing 802.11 standard and/or one or more of its publicly known enhancement/modification proposals (even if they are not marked as standard by IEEE at that point) in existence at the priority date.

Although specific embodiments of the present invention have been described, it will be understood by those of skill in the art that there are other embodiments that are equivalent to the described embodiments. As merely an example, while the specific embodiments have been described for infrastructure mode wireless connection (e.g., wireless connection between AP and client), the techniques of the present invention can also be used for ad hoc wireless connection (e.g., wireless connection between two client devices) that operates in accordance with certain IEEE 802.11w type protocols and their variants. As another example, certain alternative embodiment can include sending one or more spoofed connection responses (e.g., association response frames containing wireless MAC address of the AP in source address field and wireless MAC address of the client in destination address field, layer 2 authentication response frames etc.) from the sniffer device to disrupt the undesirable wireless link by inducing deadlock between state machines at the AP and the client. As another example, in certain alternative embodiments one or more spoofed connection requests transmitted by the sniffer can include authentication request, EAPOL START request, or combination of two or more of association request, authentication request (e.g., layer 2 authentication request), EAPOL START request etc. As yet another example, teachings of the present invention can be used for wireless connections operating according to different versions/revisions of the IEEE 802.11w protocol, their proprietary implementations, modifications, or other protocols which operate in a manner substantially similar to the IEEE 802.11w protocol. Other alternative embodiments are also possible. Accordingly, it is to be understood that the invention is not to be limited by the specific illustrated embodiments, but only by the scope of the appended claims.

An embodiment provides a method for protecting wireless communications from denial of service attacks. The method comprises establishing a first wireless connection between an access point device and a client device. The method also comprises receiving at the access point device a request for establishing a second wireless connection between the access point device and the client device while a state of the first wireless connection being an established state at an access point device side endpoint. The method comprises determining whether the request for establishing the second wireless connection is effectual to drive connection states at the access point device side endpoint and at the client device side endpoint in a condition of deadlock if the access point device side endpoint for the first wireless connection is indeed terminated upon receiving the request for establishing the second wireless connection.

The disclosure of this application also includes the following numbered clauses:
1. A method for disrupting undesirable wireless communication in wireless network, the method comprising:
   providing one or more sniffer devices to monitor wireless communications in a wireless network;
   detecting a wireless connection established between an access point device and a client device using the one or more sniffer devices, the wireless connection being configured for not being disconnected upon receiving a spoofed disconnection request transmitted from a wireless device other than the access point device and the client device; and
   disrupting the wireless connection established between the access point device and the client device by transmitting one or more spoofed connection requests from at least one of the one or more sniffer devices.
2. The method of clause 1 wherein the spoofed disconnection request transmitted by the wireless device other than the access point device and the client device comprises a deauthentication frame, the deauthentication frame being formatted in accordance with an IEEE 802.11 MAC protocol.
3. The method of clause 2 wherein a source address in the deauthentication frame being a wireless MAC address of the access point device and a destination address in the deauthentication frame being a wireless MAC address of the client device or a broadcast wireless MAC address.
4. The method of clause 3 wherein the wireless device other than the access point device and the client device spoofs the wireless MAC address of the access point device.
5. The method of clause 2 wherein a source address in the deauthentication frame being a wireless MAC address of the client device and a destination address in the deauthentication frame being a wireless MAC address of the access point device.
6. The method of clause 1 wherein the wireless connection being configured for being disconnected upon receiving a non-spoofed disconnection request at least one of the access point device or the client device.
7. The method of clause 6 wherein the non-spoofed disconnection request received at the at least one of the access point device or the client device is validated using a secret key, the secret key being negotiated between the access point device and the client device.
8. The method of clause 7 wherein the wireless device other than the access point device and the client device is without knowledge of the secret key negotiated between the access point device and the client device.
9. The method of clause 1 wherein the wireless connection established between the access point device and the client device being provided in accordance with an IEEE 802.11w type protocol.
10. The method of clause 1 wherein at least one of the one or more spoofed connection requests transmitted from the at least one of the one or more sniffer devices comprises an association request frame, the association request frame being formatted in accordance with an IEEE 802.11 MAC protocol.
11. The method of clause 10 wherein a source address in the association request frame being a wireless MAC address of the client device and a destination address in the association request frame being a wireless MAC address of the access point device.
12. The method of clause 1 wherein the disrupting the wireless connection comprises driving states associated with the wireless connection at the access point device and the client device, respectively, out of synchronization with each other.
13. The method of clause 1 wherein a state of the wireless connection at the access point device and a state of the wireless connection at the client device being states of data exchange, respectively, prior to the disrupting of the wireless connection.
14. The method of clause 13 wherein the states of the wireless connection at the access point device and the client device are each with knowledge of a shared secret key, the shared secret key being used to validate one or more disconnection requests received by at least one of the access point device or the client device.
15. The method of clause 14 wherein the disrupting the wireless connection comprises driving the state of the wireless connection at the access point device to a state of authenticated and associated, and maintaining the state of the wireless connection at the client device at the state of data exchange.
16. The method of clause 15 wherein the state of authenticated and associated is without knowledge of the shared secret key.
17. The method of clause 16 wherein a disconnection request transmitted from the access point device in the state of authenticated and associated is without being validated with the shared secret key.
18. The method of clause 17 wherein the disconnection request from the access point device that is without being validated with the shared secret key is disregarded by the client device.
19. The method of clause 18 wherein a data frame transmitted by the client device is disregarded by the access point device.
20. The method of clause 19 wherein the access point device and the client device are deadlocked.
21. A method for disrupting undesirable wireless communication in wireless network, the method comprising:
   providing one or more sniffer devices spatially disposed over a geographic region associated with the wireless network to monitor wireless communications in the wireless network;
   receiving information associated with an undesirable wireless link between an access point device and a client device at least one of the one or more sniffer devices, the information including wireless MAC addresses of the access point device and the client device, respectively; and
   driving the undesirable wireless link between the access point device and the client device in a state of deadlock by transmitting one or more spoofed connection requests from at least one of the one or more sniffer devices while the undesirable wireless link is in a state of being connected, each of the one or more spoofed connection requests including the wireless MAC address of the client device as originator identity and the wireless MAC address of the access point device as destination identity.
22. The method of clause 21 wherein the state of being connected is a state of data exchange at each of the access point device and the client device.
23. The method of clause 21 wherein the state of deadlock is characterized by a state of the wireless link at the access point device being a state of authenticated and associated and a state of the wireless link at the client device being a state of data exchange.
24. The method of clause 23 wherein the state of the wireless link at the access point device being waiting on the client device to initiate a higher layer authentication.
25. The method of clause 23 wherein the state of the wireless link at the client device being passed the higher layer authentication.
26. An apparatus for disrupting undesirable wireless communication, the apparatus comprising:
   a memory module comprising one or more electronic memory devices, the memory module storing:
      one or more first codes for receiving information associated with a wireless connection established between an access point device and a client device in a wireless network, the information including wireless MAC addresses of the access point device and the client device, respectively;
      one or more second codes for receiving instruction for disrupting the wireless connection established between the access point device and the client device; and
      one or more third codes for formatting one or more connection requests, each of the one or more connection requests including the wireless MAC address of the client device as originator identity and the wireless MAC address of the access point device as destination identity;
      a processor module comprising one or more micro processing devices, the processor module being for executing at least the first one or more codes, the second one or more codes, and the third one or more codes; and
      a transmitter module including one or more wireless communication transmitting interfaces for transmitting the one or more connection requests to disrupt the wireless connection established between the access point device and the client device.

The disclosure of this application also includes the following additional numbered clauses:
1. A method for protecting wireless communications from denial of service attacks, the method comprising:
   establishing a first wireless connection between an access point device and a client device, an access point device side endpoint and a client device side endpoint being associated with the first wireless connection, the establishing at least resulting in a state of the first wireless connection being an established state at each of the access point device side endpoint and the client device side endpoint;
   receiving at the access point device a request for establishing a second wireless connection between the access point device and the client device while the state of the first wireless connection being the established state at the access point device side endpoint;
   creating an access point device side endpoint for the second wireless connection between the access point device and the client device, subsequent to the receiving the request, while the first wireless connection is in the established state at the access point device side endpoint; and
   verifying whether the first wireless connection is in the established state at the client device side endpoint subsequent to the receiving the request for establishing the second wireless connection at the access point device.
2. The method of clause 1, and further comprising maintaining the first wireless connection in the established state at the access point device side endpoint if the verifying indicates that the first wireless connection is in the established state at the client device side endpoint.
3. The method of clause 2, and further comprising terminating the access point device side endpoint for the second wireless connection.
4. The method of clause 1, and further comprising terminating the access point device side endpoint for the first wireless connection if the verifying indicates that the first wireless connection is not in the established state at the client device side endpoint.
5. The method of clause 1 wherein a first secret key being associated with the first wireless connection while the first wireless connection is in the established state at the access point device side endpoint, the first secret key being used at least for providing cryptographic authentication for 802.11 frames transferred over the first wireless link.
6. The method of clause 5 wherein the verifying comprising:
   receiving a protected 802.11 frame from the client device's address at the access point device subsequent to the receiving the request for establishing the second wireless connection; and
   performing a cryptographic authentication check on the protected 802.11 frame using the first secret key associated with the first wireless connection.
7. The method of clause 6, and further comprising:
   maintaining the first wireless connection in the established state at the access point device side endpoint; and
   terminating the access point device side endpoint for the second wireless connection;
   if the cryptographic authentication check passes on the received protected 802.11 frame.
8. The method of clause 1 wherein the verifying comprising transmitting a probe from the access point device to the client device, the transmitting the probe being responsive to the receiving at the access point device the request for establishing the second wireless connection.
9. The method of clause 8 wherein the verifying further comprising receiving a reply from the client device's address at the access point device, the reply being responsive to the probe.
10. The method of clause 9 wherein the verifying further comprising verifying whether the received reply was indeed originated by the client device by performing a cryptographic authentication check on the reply using a first secret key, the first secret key being associated with the first wireless connection while the first wireless connection is in the established state at the access point device side endpoint, the first secret key being used at least for providing cryptographic authentication for 802.11 frames transferred over the first wireless link.
11. The method of clause 10, and further comprising terminating the access point device side endpoint for the second wireless connection if the cryptographic authentication check passes on the reply.
12. The method of clause 8 wherein the verifying further comprising initiating a timeout interval.
13. The method of clause 12, and further comprising terminating the access point device side endpoint for the first wireless connection if a reply is not received from the client device's address responsive to the probe during the timeout interval.
14. The method of clause 1 wherein the verifying comprising:
   initiating a timeout interval; and
   determining if at least one protected 802.11 frame is received from the client device's address during the timeout interval.
15. The method of clause 14, and further comprising terminating the access point device side endpoint for the first wireless connection if at least one protected 802.11 frame is not received from the client device's address during the timeout interval.
16. The method of clause 1 wherein the verifying comprising determining whether higher layer authentication succeeds at the access point device side endpoint for the second wireless connection.
17. The method of clause 16, and further comprising terminating the access point device side endpoint for the first wireless connection if the determining indicates that the higher layer authentication succeeds at the access point device side endpoint for the second wireless connection.
18. The method of clause 16 wherein the higher layer authentication is provided using at least one selected from the group consisting of PEAP (Protected Extensible Authentication Protocol), TTLS (Tunneled Transport Layer Security) and MSCHAP (Microsoft Challenge Authentication Protocol); and the method further comprising terminating the access point device side endpoint for the second wireless connection if the determining indicates that the higher layer authentication fails at the access point device side endpoint for the second wireless connection.
19. A wireless access point system for protecting wireless communications from denial of service attacks, the system comprising:
   a memory module comprising one or more electronic memory devices storing computer code;
   a processing module comprising one or more micro processing devices for executing the computer code; and
   one or more radio transceiver modules;
   wherein the computer code is adapted to:
   establish a first wireless connection with a client device using at least one of the one or more radio transceiver modules, an access point side endpoint and a client side endpoint being associated with the first wireless connection, to result in a state of the first wireless connection being an established state at each of the access point side endpoint and the client side endpoint;
   receive using at least one of the one or more radio transceiver modules a request for establishing a second wireless connection with the client device while the state of the first wireless connection being the established state at the access point side endpoint;
   create an access point side endpoint for the second wireless connection with the client device, subsequent to the receiving the request, while the first wireless connection is in the established state at the access point side endpoint;
   and verify whether the first wireless connection is in the established state at the client side endpoint subsequent to the receiving the request for establishing the second wireless connection.
20. The system of clause 19 being provided as a combination of a transceiver subsystem and a controller subsystem.
21. The system of clause 20 wherein at least a portion of the memory module is provided within the transceiver subsystem.
22. The system of clause 20 wherein at least a portion of the memory module is provided within the controller subsystem.
23. The system of clause 20 wherein at least a portion of the processing module is provided within the transceiver subsystem.
24. The system of clause 20 wherein at least a portion of the processing module is provided within the controller subsystem.
25. The system of clause 20 wherein the one or more radio transceiver modules are provided within the transceiver subsystem.
26. The system of clause 19 wherein the computer code is further adapted to maintain the first wireless connection in the established state at the access point side endpoint if the first wireless connection is verified to be in the established state at the client side endpoint.
27. The system of clause 26 wherein the computer code is further adapted to terminate the access point side endpoint for the second wireless connection.
28. The system of clause 19 wherein the computer code is further adapted to terminate the access point side endpoint for the first wireless connection if the first wireless connection is verified not to be in the established state at the client side endpoint.
29. The system of clause 19 wherein the computer code adapted to create the access point side endpoint for the second wireless connection with the client device, subsequent to the receiving the request, while the first wireless connection is in the established state at the access point side endpoint, comprises a computer code adapted to send a response to the request.
30. The system of clause 29 wherein the request includes an association request including the client device's wireless MAC address in a source address field of the association request, and the response to the request includes an association response including the client device's wireless MAC address in a destination address field of the association response.
31. The system of clause 19 wherein the computer code adapted to create the access point side endpoint for the second wireless connection with the client device, subsequent to the receiving the request, while the first wireless connection is in the established state at the access point side endpoint, comprises a computer code adapted to create one or more data structures associated with the second wireless connection at the access point side endpoint.
32. The system of clause 19 wherein the computer code is further adapted to:
   receive one or more protected 802.11 frames from the client device's address;
   and decrypt the received the one or more protected 802.11 frames using a first secret key, the first secret key being associated with the first wireless connection while the first wireless connection is in the established state at the access point device side endpoint, the first secret key being used at least for providing encryption for 802.11 frames transferred over the first wireless link;
   subsequent to the creation of the access point side endpoint for the second wireless connection and prior to conclusion of the verification of whether the first wireless connection is in the established state at the client side endpoint.
33. A method for protecting wireless communications from denial of service attacks, the method comprising:
   establishing a first wireless connection between an access point device and a client device, an access point device side endpoint and a client device side endpoint being associated with the first wireless connection, the establishing at least resulting in a state of the first wireless connection being an established state at each of the access point device side endpoint and the client device side endpoint;
   receiving at the access point device a request for establishing a second wireless connection between the access point device and the client device while the state of the first wireless connection being the established state at the access point device side endpoint;
   verifying that the first wireless connection is in the established state at the client device side endpoint subsequent to the receiving at the access point device the request for establishing the second wireless connection; and
   discarding the request for establishing the second wireless connection, the discarding being subsequent to the verifying.
34. The method of clause 33, and further comprising maintaining the state of the first wireless connection in the established state at the access point device side endpoint, subsequent to the verifying.
35. The method of clause 33 wherein the verifying comprising transmitting a probe from the access point device to the client device, the transmitting the probe being responsive to the receiving at the access point device the request for establishing the second wireless connection.
36. The method of clause 35 wherein the verifying further comprising receiving a reply from the client device's address at the access point device, the reply being responsive to the probe.
37. The method of clause 36 wherein the verifying further comprising performing a cryptographic authentication check on the reply using a first secret key, the first secret key being associated with the first wireless connection while the first wireless connection is in the established state at the access point device side endpoint, the first secret key being used at least for providing cryptographic authentication for 802.11 frames transferred over the first wireless link.
38. The method of clause 37 wherein the cryptographic authentication check passes on the reply.
39. The method of clause 33 wherein the verifying comprising:
   receiving a protected 802.11 frame from the client device's address at the access point device subsequent to the receiving at the access point device the request for establishing the second wireless connection; and
   performing a cryptographic authentication check on the protected 802.11 frame using a first secret key, the first secret key being associated with the first wireless connection while the first wireless connection is in the established state at the access point device side endpoint, the first secret key being used at least for providing cryptographic authentication for 802.11 frames transferred over the first wireless link.
40. The method of clause 39 wherein the cryptographic authentication check passes on the reply.
41. A method for protecting wireless communications from denial of service attacks, the method comprising:
   establishing a first wireless connection between an access point device and a client device, an access point device side endpoint and a client device side endpoint being associated with the first wireless connection, the establishing at least resulting in a state of the first wireless connection being an established state at each of the access point device side endpoint and the client device side endpoint;
   receiving at the access point device a request for establishing a second wireless connection between the access point device and the client device while the state of the first wireless connection being the established state at the access point device side endpoint;
   verifying that the first wireless connection is not in the established state at the client device side endpoint subsequent to the receiving the request at the access point device for establishing the second wireless connection;
   terminating the access point device side endpoint for the first wireless connection subsequent to the verifying; and
   creating an access point device side endpoint for the second wireless connection subsequent to the verifying.
42. The method of clause 41 wherein the verifying comprising:
   transmitting a probe from the access point device to the client device, the transmitting the probe being responsive to the receiving at the access point device the request for establishing the second wireless connection; and
   initiating a timeout interval.
43. The method of clause 42 wherein the verifying further comprising determining that a reply is not received from the client device's address at the access point device within the timeout interval, the reply being responsive to the probe.
44. The method of clause 42 wherein the verifying further comprising:
   receiving a reply from the client device's address at the access point device within the timeout interval, the reply being responsive to the probe; and
   performing a cryptographic authentication check on the reply using a first secret key, the first secret key being associated with the first wireless connection while the first wireless connection is in the established state at the access point device side endpoint, the first secret key being used at least for providing cryptographic authentication for 802.11 frames transferred over the first wireless link.
45. The method of clause 44 wherein the cryptographic authentication check fails on the reply.
46. A wireless access point system for protecting wireless communications from denial of service attacks, the system comprising:
   a memory module comprising one or more electronic memory devices storing computer code;
   a processing module comprising one or more micro processing devices for executing the computer code; and
   one or more radio transceiver modules;
   wherein the computer code is adapted to:
   establish a first wireless connection with a client device using at least one of the one or more radio transceiver modules, an access point side endpoint and a client side endpoint being associated with the first wireless connection, to result in a state of the first wireless connection being an established state at each of the access point side endpoint and the client side endpoint;
   receive using at least one of the one or more radio transceiver modules a request for establishing a second wireless connection with the client device while the state of the first wireless connection being the established state at the access point side endpoint;
   verify that the first wireless connection is in the established state at the client side endpoint subsequent to the receiving the request for establishing the second wireless connection; and
   discard, subsequent to the verifying, the request for establishing the second wireless connection.
47. The system of clause 46 being provided as a combination of a transceiver subsystem and a controller subsystem.
48. The system of clause 47 wherein at least a portion of the memory module is provided within the transceiver subsystem.
49. The system of clause 47 wherein at least a portion of the memory module is provided within the controller subsystem.
50. The system of clause 47 wherein at least a portion of the processing module is provided within the transceiver subsystem.
51. The system of clause 47 wherein at least a portion of the processing module is provided within the controller subsystem.
52. The system of clause 47 wherein the one or more radio transceiver modules are provided within the transceiver subsystem.
53. A wireless access point system for protecting wireless communications from denial of service attacks, the system comprising:
   a memory module comprising one or more electronic memory devices storing computer code;
   a processing module comprising one or more micro processing devices for executing the computer code; and
   one or more radio transceiver modules;
   wherein the computer code is adapted to:
   establish a first wireless connection with a client device using at least one of the one or more radio transceiver modules, an access point side endpoint and a client side endpoint being associated with the first wireless connection, to result in a state of the first wireless connection being an established state at each of the access point side endpoint and the client side endpoint;
   receive using at least one of the one or more radio transceiver modules a request for establishing a second wireless connection with the client device while the state of the first wireless connection being the established state at the access point side endpoint;
   verify that the first wireless connection is not in the established state at the client side endpoint subsequent to the receiving the request for establishing the second wireless connection;
   terminate the access point side endpoint for the first wireless connection subsequent to the verifying; and
   create an access point side endpoint for the second wireless connection subsequent to the verifying.
54. The system of clause 53 being provided as a combination of a transceiver subsystem and a controller subsystem.
55. The system of clause 53 wherein the computer code adapted to create the access point side endpoint for the second wireless connection with the client device, subsequent to the verifying, comprises a computer code adapted to send a response to the request.
56. The system of clause 55 wherein the request includes an association request including the client device's wireless MAC address in a source address field of the association request, and the response to the request includes an association response including the client device's wireless MAC address in a destination address field of the association response.

## Claims

1. A method for protecting wireless communications from denial of service attacks, the method comprising:
establishing a first wireless connection between an access point device and a client device, an access point device side endpoint and a client device side endpoint being associated with the first wireless connection, the establishing at least resulting in a state of the first wireless connection being an established state at each of the access point device side endpoint and the client device side endpoint;
receiving at the access point device a request for establishing a second wireless connection between the access point device and the client device while the state of the first wireless connection being the established state at the access point device side endpoint,
wherein the request for establishing the second wireless connection is intended to terminate the access point device side endpoint for the first wireless connection to initiate establishment of the second wireless connection from the access point device; and
determining whether the request for establishing the second wireless connection is effectual to drive connection states at the access point device side endpoint and at the client device side endpoint in a condition of deadlock if the access point device side endpoint for the first wireless connection is indeed terminated upon receiving the request for establishing the second wireless connection.

2. The method of claim 1 wherein the determining comprises:
receiving an authentication data containing frame, for example an 802.11 frame comprising authentication data, from the client device's address at the access point device; and
performing a cryptographic authentication check on the authentication data containing frame using a secret key associated with the first wireless connection, the secret key being used at least for providing cryptographic authentication for authentication data containing frames transferred over the first wireless connection.

3. The method of claim 2, and further comprising:
determining that the access point device side endpoint for the first wireless connection is not to be terminated upon receiving the request for establishing the second wireless connection,
if the cryptographic authentication check passes on the authentication data containing frame.

4. The method of claim 3 wherein the request for establishing the second wireless connection is effectual to drive connection states at the access point device side endpoint and at the client device side endpoint in the condition of deadlock if the access point device side endpoint for the first wireless connection is indeed terminated upon receiving the request for establishing the second wireless connection.

5. The method of claim 4 wherein the determining whether the request for establishing the second wireless connection is effectual to drive connection states in the condition of deadlock comprising transmitting a probe from the access point device to the client device's address, the probe being adapted to elicit the authentication data containing frame as response.

6. The method of claim 1 wherein the determining comprising:
transmitting a probe from the access point device to the client device's address, the probe being adapted to elicit a response from the client device if the first wireless connection is in the established state at the client device side endpoint; and
initiating a timeout interval, the timeout interval being adapted to end after a portion of time from the instant of transmitting the probe from the access point device.

7. The method of claim 6, and further comprising:
ascertaining that the response is not received at the access point device until the end of the timeout interval;
determining, based in part on the ascertaining, that the request for the second wireless connection is not effectual to drive connection states at the access point device side endpoint and at the client device side endpoint in the condition of deadlock if the access point device side endpoint for the first wireless connection is indeed terminated upon receiving the request for establishing the second wireless connection; and
terminating the access point device side endpoint for the first wireless connection upon receiving at the access point device the request for establishing the second wireless connection.

8. The method of claim 6, and further comprising:
ascertaining that the response is received at the access point device before the end of the timeout interval; and
determining, based in part on the ascertaining, that the access point device side endpoint for the first wireless connection is not to be terminated at least upon receiving the request for establishing the second wireless connection.

9. The method of claim 8 wherein the request for establishing the second wireless connection is effectual to drive connection states at the access point device side endpoint and at the client device side endpoint in the condition of deadlock if the access point device side endpoint for the first wireless connection is indeed terminated upon receiving the request for establishing the second wireless connection.

10. The method of claim 9 wherein the first wireless connection is provided in accordance with an IEEE 802.11 protocol, wherein the first wireless connection being free from termination via unauthenticated deauthentication message or unauthenticated disassociation message targeted to the access point device or the client device.

11. The method of claim 10 wherein the deadlock condition comprises the state of the first wireless connection being the established state at the client device side endpoint for an interval of time after termination of the access point device side endpoint for the first wireless connection, wherein
the access point device fails to decrypt one or more encrypted data packets transmitted by the client device to the access point device during the interval of time; and
the client device discards unauthenticated deauthentication message or unauthenticated disassociation message transmitted by the access point device to the client device during the interval of time.

12. A wireless access point system including a way of protecting wireless communications from denial of service attacks, the system comprising:
a memory module comprising one or more computer memory devices storing computer code;
a processing module comprising one or more micro processing devices for executing the computer code; and
one or more radio transceiver modules;
wherein the computer code is adapted to instruct at least the processing module to perform the steps of:
establishing a first wireless connection with a client device using at least one of the one or more radio transceiver modules, an access point side endpoint and a client side endpoint being associated with the first wireless connection, to result in a state of the first wireless connection being an established state at each of the access point side endpoint and the client side endpoint;
receiving using at least one of the one or more radio transceiver modules a request for establishing a second wireless connection with the client device while the state of the first wireless connection being the established state at the access point side endpoint, wherein the request for establishing the second wireless connection is intended to terminate the access point side endpoint for the first wireless connection to initiate establishment of the second wireless connection from the access point side; and
determining whether the request for establishing the second wireless connection is effectual to drive connection states at the access point side endpoint and at the client side endpoint in a condition of deadlock if the access point side endpoint for the first wireless connection is indeed terminated upon receiving the request for establishing the second wireless connection.

13. The system of claim 12 wherein the determining comprising:
transmitting a probe from the access point device to the client device's address, the probe being adapted to elicit a response within a timeout interval from the client device if the first wireless connection is in the established state at the client side endpoint.

14. A method for protecting wireless communications from denial of service attacks, the method comprising:
establishing a first wireless connection between an access point device and a client device, an access point device side endpoint and a client device side endpoint being associated with the first wireless connection, the establishing at least resulting in a state of the first wireless connection being an established state at each of the access point device side endpoint and the client device side endpoint;
receiving at the access point device a request for establishing a second wireless connection between the access point device and the client device while the state of the first wireless connection being the established state at the access point device side endpoint,
wherein the request for establishing the second wireless connection is intended to terminate the access point device side endpoint for the first wireless connection to initiate establishment of the second wireless connection from the access point device;
creating an access point device side endpoint for the second wireless connection between the access point device and the client device, subsequent to the receiving the request, while the first wireless connection is in the established state at the access point device side endpoint; and
verifying whether the first wireless connection is in the established state at the client device side endpoint to determine whether the access point device side endpoint for the first wireless connection is to be terminated responsive to the request for the second wireless connection.

15. The method of claim 14, and further comprising:
terminating the access point device side endpoint for the second wireless connection and not terminating the access point device side endpoint for the first wireless connection at least responsive to the request for the second wireless connection, if the verifying indicates that the first wireless connection is in the established state at the client device side endpoint; or
terminating the access point device side endpoint for the first wireless connection, if the verifying indicates that the first wireless connection is not in the established state at the client device side endpoint.
